(19) Europäisches Patentamt
European Patent Office
Office européen des brevets

(11) **EP 1 650 609 B1**

(12) **EUROPEAN PATENT SPECIFICATION**

(45) Date of publication and mention of the grant of the patent:
**18.09.2013 Bulletin 2013/38**

(51) Int Cl.:
*G03G 15/16* (2006.01)   *G03G 15/08* (2006.01)
*G03G 15/20* (2006.01)   *G03G 21/00* (2006.01)
*G03G 5/10* (2006.01)

(21) Application number: **04747847.4**

(22) Date of filing: **23.07.2004**

(86) International application number:
**PCT/JP2004/010458**

(87) International publication number:
**WO 2005/010621 (03.02.2005 Gazette 2005/05)**

(54) **ENDLESS BELT FOR IMAGE FORMING DEVICES AND IMAGE FORMING DEVICE**

ENDLOSBAND FÜR BILDERZEUGUNGSEINRICHTUNGEN UND BILDERZEUGUNGSEINRICHTUNG

COURROIE SANS FIN POUR DISPOSITIFS DE FORMATION D'IMAGE ET DISPOSITIF DE FORMATION D'IMAGE ASSOCIE

(84) Designated Contracting States:
**DE**

(30) Priority: **25.07.2003   JP 2003201844**
**05.09.2003   JP 2003314291**
**12.04.2004   JP 2004116996**
**23.04.2004   JP 2004128485**

(43) Date of publication of application:
**26.04.2006   Bulletin 2006/17**

(73) Proprietors:
• **Mitsubishi Chemical Corporation**
**Chiyoda-ku**
**Tokyo 100-8251 (JP)**
• **Yuka Denshi Co., Ltd.**
**Minato-ku,**
**Tokyo 108-0014 (JP)**

(72) Inventors:
• **MORIKOSHI, M.,**
**Mitsubishi Chemical Group**
**Yokkaichi--shi,**
**Mie 510-8530 (JP)**
• **OTSU, T.,**
**Mitsubishi Chemical Group**
**Yokkaichi-shi,**
**Mie 510-8530 (JP)**
• **YAMAOKA, K.,**
**MITSUBISHI CHEMICAL GROUP**
**Yokkaichi-shi,**
**Mie 510-8530 (JP)**
• **MIZUMOTO, K.,**
**MITSUBISHI CHEMICAL GROUP**
**Yokkaichi-shi,**
**Mie 510-8530 (JP)**

(74) Representative: **HOFFMANN EITLE**
**Patent- und Rechtsanwälte**
**Arabellastrasse 4**
**81925 München (DE)**

(56) References cited:
| | |
|---|---|
| JP-A- 10 006 411 | JP-A- 10 006 411 |
| JP-A- 2000 181 110 | JP-A- 2002 341 670 |
| JP-A- 2002 341 670 | JP-A- 2003 005 538 |
| JP-A- 2003 029 537 | JP-A- 2003 091 165 |
| JP-A- 2003 156 902 | JP-A- 2003 156 902 |

**Description**

<u>TECHNICAL FIELD</u>

The present invention relates to an endless belt for image-forming apparatuses and an image-forming apparatus, and more particularly, to an endless belt for image-forming apparatuses, which is excellent in properties such as molding dimensional stability and flexing resistance, and an image-forming apparatus provided with the endless belt. The endless belt of the present invention is suitably used as an belt for image-forming apparatuses, such as an intermediate transfer belt, a transporting transfer belt, a photosensitive belt and a fixing belt, which are used in electrophotographic copying machines, laser-beam printers, LED printers, facsimiles, etc.

<u>BACKGROUND ART</u>

Conventionally, as image- forming apparatuses for OA equipments, those apparatuses of an electrophotographic type system using a photosensitive member and a toner have been developed and commercially available. In these conventional apparatuses, an endless belt of either a seamed type or seamless type, which is controlled in electric resistance so as to exhibit a conductivity, a semi- conductivity or an insulating property, is used as a photosensitive belt, an intermediate belt, a transporting transfer belt, a transfer separation belt, a charging belt, a developing belt, a fixing belt or a toner transfer belt.

For example, the intermediate transfer device is constructed so as to transfer a toner image once formed on an intermediate transfer member onto a paper, etc. In such an intermediate transfer device, an endless belt in the form of a seamless belt is used as a surface layer of the intermediate transfer member for electrifying and destaticizing the toner. The endless belt has a surface resistivity and a resistivity in its thickness direction (hereinafter referred to as a "volume resistivity") which are respectively varied depending upon kinds of machines used, and are controlled so as to exhibit a conductivity, a semi-conductivity or an insulating property.

Also, the transporting transfer device is constructed such that a toner is transferred from the photosensitive member to a paper held on a transporting transfer member, and then the paper is released from the transporting transfer member by destaticization of the toner. In such a transporting transfer device, a seamed or seamless endless belt is used for electrifying and destaticizing the paper. Similarly to the intermediate transfer belt, the endless belt used in the transporting transfer device also has a surface resistivity and a volume resistivity which are respectively varied depending upon kinds of machines used, and are controlled so as to exhibit a conductivity, a semi- conductivity or an insulating property.

Meanwhile, conductive endless belts used in the image- forming apparatuses such as electrophotographic copying machines and printers are functionally operated for a long period of time under a high tension using two or more rolls while applying a high voltage thereto and, therefore, are required to have sufficient mechanical and electrical durability.

In particular, in the case of the intermediate transfer belt used in the intermediate transfer device for transferring a toner image formed thereon onto papers, when the belt suffers from looseness, elongation or meandering motion during its operation, deviation of the toner images to be transferred tends to be caused. For this reason, it is required that the intermediate transfer belt exhibits a high dimensional accuracy (less difference between circumferential lengths in a width direction of the belt, and uniform thickness), a high modulus (high tensile modulus in a circumferential direction of the belt) and a high flexing resistance (less breakability).

Further, in recent years, there is caused severe competition between image- forming apparatuses of an electrophotographic type system such as color laser printers and color LED printers, and inexpensive image- forming apparatuses of an ink- jet printing type system. In order to distinguish the electrophotographic- type image- forming apparatuses from the ink- jet printing type ones in view of high- speed printing techniques, there have been developed and commercialized such image- forming apparatuses which are intended to achieve a high- speed printing by a tandem- type transporting transfer system or intermediate transfer system using four photosensitive members arranged in series. Consequently, it is required that the endless belts for image- forming apparatuses are further enhanced in durability and an ability of preventing deviation of images.

Hitherto, the above requirements for the endless belts have been accomplished to a certain extent by improving respective raw materials therefor.

However, in recent years, not only high- speed printing but also enhancement of image quality have been increasingly required. In particular, in order to distinguish the electrophotographic apparatuses from the ink- jet printers, it becomes important to obtain high- quality images over wide temperature and humidity ranges, and achieve a high- image quality when printed not only on special papers for color printers but also on various papers such as wood- free papers, recycled papers, backing papers and OHP films. To solve these problems, as the toner for the electrophotographic image- forming apparatuses, there have been positively developed and commercialized polymeric toners having a particle size as small as 4 to 6 $\mu$m and a uniform particle size distribution. On the other hand, to meet the above requirements, the improvements in surface properties, chemical properties and electrical properties of the transfer belt has been increasingly demanded.

In particular, in the case of the intermediate transfer belt used in intermediate transfer device, the toner on the photosensitive member is directly transferred onto the transfer belt by an electrostatic force (primary transfer) to produce a color image on the transfer belt, and then the toner is transferred from the transfer belt onto a paper by an electrostatic force (secondary transfer). For this reason, it is required that the transfer belt is improved in not only electrical resistance characteristics such as surface resistivity and volume resistivity, but also surface physical properties and surface chemical properties thereof.

From the above discussions, the endless belts for recent image-forming apparatuses such as transfer belts are required to meet the following conditions (1) to (8):

(1) Good surface resistivity and volume resistivity in a semiconductor region, and a less change in these resistivity values (narrow distribution of the electric resistivity);
(2) Good toner releasability;
(3) Thin and uniform thickness;
(4) High mechanical strength (less elongation and less breakability);
(5) Less change in resistivity values, dimensions and mechanical strength due to environmental conditions (such as temperature and humidity);
(6) Low costs;
(7) Seamless belt having a high roundness (less difference between circumferential lengths in a width direction of the belt); and
(8) Printability of high-quality images on various kinds of papers.

As the endless belts, there have been mainly used those belts produced by molding a mixture composed of a resin material such as thermoplastic and thermosetting resins, and a conductive filler blended in the resin material such as carbon black and conductive metal fillers, or by molding a mixture of the resin material and an ionic conductive substance. For example, it is known that resin belts having predetermined electric resistivity values (surface resistivity and volume resistivity) , which are produced by molding a blended mixture obtained by mixing either carbon black such as acetylene black, furnace black and channel black or an insulating polymer compound whose electric resistivity is well controlled by adding an ionic conductive substance thereto, with a resin composition of polyamides, polyimides, polyvinylidene fluoride, ethylene tetrafluoroethylene copolymers, polycarbonates, polyesters, etc., into a belt shape having a thickness of about several tens to several hundreds $\mu$m, are used as an intermediate transfer belt or a transporting transfer belt having combined functions of paper transportation and toner transfer (Japanese Patent Application Laid- Open (KOKAI) Nos. 63- 311267 (1988) , 5- 170946 (1993) , 6- 228335 (1994) and 3- 89357 (1991) ) .

In addition, there have also been proposed endless belts made of a flexible material other than the above resin materials such as rubbers and thermoplastic elastomers (Japanese Patent Application Laid- Open (KOKAI) Nos. 9- 54506 (1997) , 8- 99347 (1996) , 10- 6411 (1998) , 2000- 62993 and 2001- 13802) .

Meanwhile, the endless belt is produced, for example, by the following methods.

(a) Rotational molding method (also occasionally referred to as "centrifugal molding method") :

The rotational molding method comprises a step of applying a resin solution to an inner peripheral surface of a cylindrical mold, heating the resin solution while rotating the cylindrical mold to volatilize a half or more amount of a solvent therefrom and then taking a seamless tube out of the mold, and a step of fitting the thus obtained seamless tube on an outer peripheral surface of another cylindrical mold and then heating the seamless tube to subject the tube to thermosetting reaction. This method is mainly used for producing a transfer belt made of polyimides (Japanese Patent Application Laid- Open (KOKAI) No. 60- 170862 (1985) ) .

(b) Extrusion molding method:

In the extrusion molding method, a resin in which a conductive filler is compounded, is melt-extruded into a ring shape. The extrusion molding method is mainly used for producing a transfer belt made of ethylene tetrafluoroethylene copolymers, polyvinylidene fluoride, polycarbonates, polyesters or polyimides.

(c) Dipping method:

In the dipping method, a resin solution is applied into a uniform thickness onto an outer surface of a hollow-cylindrical or a solid-cylindrical mold and cured under heating to form a coating film, and the resultant tubular coating film is taken off from the mold. The dipping method is mainly used for producing a transfer film made of polyvinylidene fluoride.

(d) Rubber-extrusion molding method:

In the rubber-extrusion molding method, a polyurethane rubber is extruded into a tubular shape, vulcanized and surface-polished, and then a fluororesin coat is formed onto an outermost surface of the resultant tubular film ("Journal of Japan Institute of Electrophotographics", 33(1), 43(1994)).

Resin- based endless belts mainly made of thermoplastic resins can be easily produced by a continuous molding process. In particular, in the consideration of low costs, there have been proposed extrusion- molded endless belts made of thermoplastic resins (Japanese Patent Application Laid- Open (KOKAI) No. 3- 89357 (1991) ) . However, the endless belts made of a resin material simply blended with a conductive agent tends to be deteriorated in flexing resistance and, therefore, suffer from problems such as formation of cracks during use as an intermediate transfer belt.

To solve the problems, there have been proposed endless belts made of an alloyed resin prepared by blending polyalkylene terephthalate such as polybutylene terephthalate with polycarbonates (Japanese Patent Application Laid-Open (KOKAI) No. 4- 313757 (1992) ) . However, since these endless belts still tend to suffer from formation of cracks, it is required to reinforce ends of the belts by attaching a reinforcing tape, etc., thereto. As a result, there arise problems such as increased costs.

Further, there have also been proposed alloyed resin- based endless belts made of combination of various engineering plastic materials, e.g., combination of polyacrylate with polyester, combination of polyalkylene terephthalate with polyamide, combination of polycarbonate with polyamide, or combination of polysulfone or polyether sulfone with polyester or polyphenylene sulfide.

However, these alloyed resin- based materials tend to be inherently deteriorated in flexing resistance, and have such a problem that the flexing resistance thereof tends to be further deteriorated when adding a conductive substance such as carbon thereto. Also, the alloyed resin- based materials must be heat- extruded at under a high temperature condition because of engineering plastics having a high heat resistance. As a result, the conductive substances added to the alloyed resin tend to be deteriorated in themselves or to undergo accelerated decomposition reaction with the resins, and the resultant belt tends to be deteriorated in appearance owing to residual decomposed gases remaining in raw materials of the belt, or tends to be extremely deteriorated in flexing resistance owing to decomposition of the alloyed resin materials.

Also, since all of these resin- based belts have a high tensile modulus and, therefore, a high hardness, when such a resin- based belt is used as a transfer belt for transferring a toner from a photosensitive member thereonto (primary transfer) , it may be difficult to ensure a sufficient transfer region (also referred to as "transfer nip") . Therefore, defective transfer of the toner tends to be caused, resulting in undesired phenomenon that the toner remains on the side of the photosensitive member, and is deposited and fixed thereon. As a result, the transfer of the toner from the photosensitive member onto the transfer belt tends to be insufficient, resulting in such a problem that the toner transfer efficiency at the primary transfer region is extremely lowered.

Further, when the above hard belt having a high tensile modulus is used in the secondary transfer operation, a high pressure is applied to the toner layer interposed between a relatively hard transfer roller and the hard belt. As a result, the toner layer formed at a central portion of respective character toner images is exposed to concentrated high pressure, and compressed and broken, resulting in problems such as insufficient transfer of the toner (so- called "missing or lacking of characters") . In addition, the hard belt has additional problems such as insufficient transfer of the toner onto papers having a large surface roughness such as recycled papers.

To improve such toner- transferring characteristics of the resin- based belts, there have been proposed endless belts made of a flexible material such as rubbers (Japanese Patent Application Laid- Open (KOKAI) No. 9- 54506 (1997) ) .

However, such rubber belts tend to be readily elongated in a circumferential direction thereof owing to the too high flexibility, resulting in deviation of toner images produced. To solve this problem, it has been attempted to embed a hardly stretchable material such as woven fabric within the belts. However, in this case, the belts are necessarily increased in thickness, and may fail to have a uniform thickness.

Also, since the rubbers contain easily- bleeding low- molecular weight additives such as vulcanizing agents and plasticizers, the photosensitive members tend to be stained by the bled- out additives. Further, since the rubber belts are produced by a batch- type method, it may be difficult to reduce the production costs and uniformly control electric resistivity values into a semiconductor region by using a conductive filler. To solve these problems, an ionic conductive agent is generally blended in the rubber belts. For this reason, there tends to be caused such a problem that the resistivity value of the belts varies by 2 to 3 digits depending upon change in temperature and humidity.

On the other hand, there have been proposed belts using thermoplastic elastomers instead of the rubbers, or belts made of alloys of thermoplastic elastomers with thermoplastic resins (Japanese Patent Application Laid- Open (KOKAI) Nos. 8- 99374 (1996) , 10- 6411 (1998) , 2000- 62993, 2001- 13802 and 2003- 29537) .

The belts made of alloys of thermoplastic resins and thermoplastic elastomers (Japanese Patent Application Laid- Open (KOKAI) Nos. 8- 99374 (1996) and 10- 6411 (1998) ) tend to be deteriorated in dispersibility between the thermoplastic resins and thermoplastic elastomers and, therefore, suffer from agglomeration of carbon, so that the electric resistivity values of the belt have a large voltage dependency, resulting in wide distribution of the electric resistivity thereof. Further, since the electric resistivity values of the belt not only have the large voltage dependency, but also largely vary depending upon temperature and humidity conditions, there tends to arise such a problem that high quality images are unobtainable under every use condition. In addition, when assembled within image- forming apparatuses, such endless belts tend to suffer from leakage loss upon applying a high voltage thereto.

The belts made of alloys of thermoplastic resins and low-melting thermoplastic elastomers (Japanese Patent Application Laid-Open (KOKAI) No. 2000-62993) tend to be undesirably stretched due to the low-melting thermoplastic elastomers, resulting in deviation of images produced. Further, since a soft segment portion of the thermoplastic elastomers has a poor toner releasability, there tends to arise such a problem that the toner transfer efficiency is lowered at the secondary transfer section where the toner is transferred from the belt to papers. Further, when using an extrusion-molding method, the resultant endless belts may fail to exhibit a good roundness due to a high flexibility thereof, thereby requiring post treatments such as heat treatments. Furthermore, such endless belts tend to be deteriorated in chemical resistance owing to a less amount of crystalline components contained therein, resulting in deterioration in quality of the belt due to adverse influence of silicone oils generated from a fixing member of the image-forming apparatuses, etc.

Also, the extrusion- molded belts in the form of a laminated belt having a thermoplastic resin layer and a thermoplastic elastomer layer, which exhibit both a low elongation and a good flexibility (Japanese Patent Application Laid- Open (KOKAI) No. 2001- 13802) have such a problem that the resistivity values of the belts tend to have a wide distribution since the electric resistivity value of each layer is adversely influenced by fluctuation of flow characteristics of the respective molten resins upon molding. Further, the surface layer of the belts made of the thermoplastic elastomer tends to be deteriorated in chemical resistance owing to a less amount of crystalline components contained therein, resulting in deterioration in quality of the belt due to adverse influence of silicone oils generated from a fixing member of the image- forming apparatuses, etc.

DISCLOSURE OF THE INVENTION

Problem to be Solved by the Invention

That is, the conventional belts have the following problems.

(1) Resin belts tend to suffer from cracks and missing or lacking of character images produced due to agglomeration and breakage of toner.
(2) Rubber belts tend to require high production costs and suffer from large change in electric resistivity depending upon temperature and humidity conditions, and further has such a problem that a photosensitive member tends to be stained by bleeding-out of crosslinking agents or plasticizers therefrom.
(3) The toner releasability, dimensional accuracy and electrical resistivity of thermoplastic elastomer belts exhibit a large voltage dependency. In addition, the thermoplastic elastomer belts are susceptible to "bending deformation (reshaping)" at their curved portions where the belts are tensioned between rollers during stoppage thereof in image-forming apparatuses, resulting in formation of defective images at the reshaped or deformed portions of the belts.

As described above, there still exist no endless belts which satisfy a high image quality, a high durability, a high dimensional accuracy and low production costs at the same time, and most of the conventional belts are usable only in limited temperature and humidity conditions in the image-forming apparatuses, and applicable only to limited kinds of printing papers.

The present invention has been made in view of the above problems. An object of the present invention is to provide an endless belt for image-forming apparatuses, which satisfies a high image quality, a high durability, a high dimensional accuracy and low production costs at the same time, and is free from limitations to temperature and humidity conditions upon using in image-forming apparatuses, and kinds of printing papers used; as well as an image-forming apparatus using the endless belt.

Also, another object of the present invention is to provide an endless belt for image- forming apparatuses, which is excellent in flexing resistance, chemical resistance, roller- reshaping or deforming resistance, dimensional stability, electrical resistivity and environmental stability of these properties, is inexpensive, and is capable of achieving a high image quality and a high durability.

MEANS FOR SOLVING THE PROBLEMS

In the course of continuous studies for accomplishing the above objects, the present inventors have repeated image-forming tests by using thermoplastic elastomers as materials capable of reducing the production costs from the standpoints of a good extrusion-moldability and a good flexibility thereof, notifying a tensile modulus, surface roughness and surface wettability of the belt as well as dispersing condition of a conductive substance therein, and examining environmental dependency and voltage dependency of the electrical resistivity thereof.

As a result, it has been found that endless belts which exhibit specific tensile modulus, surface roughness and surface wettability by using specific thermoplastic elastomers as raw materials thereof and in which a conductive substance showing a voltage dependency of its electrical resistivity is contained in a dispersed state, can be improved in toner transfer efficiency not only in a primary transfer section but also in a secondary transfer section of image-forming apparatuses, and are free from undesirable reshaping or deformation during use. Further, it has been found that endless belts using a specific conductive substance are capable of forming stable images even under extensive temperature and humidity environmental conditions. In addition, it has been found that endless belts produced from such a blended mixture by a specific molding method can provide a high image quality and exhibit a high durability such as a high stability against temperature and humidity environmental conditions, a high dimensional accuracy and low production costs.

The present invention has been attained on the basis of the above findings. To accomplish the aims, in the present invention, there is provided an endless belt for image-forming apparatuses, containing a blended mixture of a thermoplastic elastomer, a thermoplastic resin and a conductive substance, the said endless belt having properties satisfying the following formulae (1), (2) and (3):

$$SR(100V)/SR(500V) < VR(100V)/VR(250V) \quad (1)$$

$$SR(100V)/SR(500V) \leq 30 \quad (2)$$

$$8 \leq VR(100V)/VR(250V) \leq 100 \quad (3)$$

wherein SR(100V) represents a surface resistivity as measured by applying a voltage of 100V to the endless belt for 10 sec, SR(500V) represents a surface resistivity as measured by applying a voltage of 500V to the endless belt for 10 sec, VR(100V) represents a volume resistivity as measured by applying a voltage of 100V to the endless belt for 10 sec, and VR(250V) represents a volume resistivity as measured by applying a voltage of 250V to the endless belt for 10 sec.

EFFECT OF THE INVENTION

In accordance with the present invention, there are provided an endless belt for image-forming apparatuses, which is excellent in flexing resistance, chemical resistance, reshaping or deforming resistance, dimensional stability, electrical resistivity and external environment stability of these properties, is inexpensive, and is capable of achieving a high image quality and a high durability, as well as an image-forming apparatus using the endless belt. Also, in accordance with the present invention, there are provided an endless belt for image-forming apparatuses, which is well controlled in tensile modulus by using an alloy of a thermoplastic resin and a thermoplastic elastomer as a raw material thereof, and well controlled in electric resistivity by blending carbon black and a viscous polymer (thickening agent) in the alloyed resin, which exhibits a less voltage dependency of the electric resistivity, a less change in the electric resistivity due to temperature and humidity environmental conditions and excellent flexing resistance, chemical resistance and molding dimensional stability, and which provides a high image quality on various recording papers including from surface-roughened papers to smooth papers under any environmental conditions from low-temperature and low-humidity conditions to high-temperature and high-humidity conditions; as well as an image-forming apparatus using the endless belt.

BRIEF DESCRIPTION OF THE DRAWINGS

Fig. 1 is a perspective view showing an intermediate transfer belt for evaluation obtained in Examples and Comparative Examples.
Fig. 2 is an explanatory view of the intermediate transfer device.

Fig. 3 is a perspective view showing a method of evaluating a roller-reshaping or deforming resistance of the belt.

PREFERRED EMBODIMENTS OF THE INVENTION

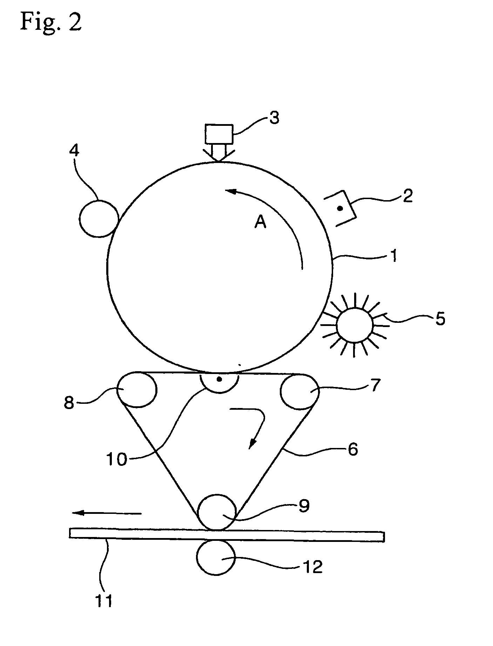

The present invention is described in detail below. In advance of explaining the present invention, an intermediate transfer device into which the endless belt of the present invention is incorporated, is described by referring to Fig. 2. Fig. 2 is an explanatory view of the intermediate transfer device.

As shown in Fig. 2, around a photosensitive drum (1), there is disposed an electrophotographic process unit which includes a charging device (2), an exposure optical system (3) using a semiconductor layer, etc., as a light source, a developing device (4) for receiving a toner, and a cleaner (5) for removing a residual toner. A conductive endless belt (6) is tensioned and spanned between transporting rollers (7, 8, 9), and moved in the direction indicated by the arrow in Fig. 2 in a synchronous relation to rotational movement of the photosensitive drum in the direction also indicated by the arrow in Fig. 2.

Next, the operation of the intermediate transfer device is explained. First, the surface of the photosensitive drum (1) rotating in the direction indicated by the arrow A is uniformly electrified by the charging device (2). Then, an electrostatic latent image corresponding to image read out by an image reader (not shown) of the optical system (3) is formed on the photosensitive drum (1), and developed by the developing device (4) to obtain a toner image which is then transferred onto the conductive endless belt (6) by an electrostatic transfer device (10) and then transferred to a recording paper (11) between a transporting roller (9) and a pressure roller (12).

Next, the endless belt of the present invention is described.

(1) Material of endless belt:

The endless belt of the present invention is made of a thermoplastic polymer component containing a thermoplastic elastomer, a thermoplastic resin, and a conductive substance. The materials of the endless belt of the present invention are not particularly limited as long as a tensile modulus, surface wettability and flexing resistance thereof basically satisfy the specified ranges. The thermoplastic polymer component may contain, in addition to the thermoplastic elastomer, a thermoplastic resin, etc., if required. Namely, the thermoplastic polymer component may contain known thermoplastic elastomer and thermoplastic resin as main components. The endless belt of the present invention can exhibit a suitable conductivity by blending a necessary amount of a conductive filler or a material capable of exhibiting a conductivity such as an ionic conductive substance therein.

(A) Thermoplastic elastomer:

Examples of the thermoplastic elastomer used in the present invention may include polyester-based thermoplastic elastomers, polyamide-based thermoplastic elastomers, polyether-based thermoplastic elastomers, polyolefin-based thermoplastic elastomers, polyurethane-based thermoplastic elastomers and vinyl chloride-based thermoplastic elastomers.

The thermoplastic elastomer has a crystalline melting point of preferably 190 to 220°C, and a melt flow rate (MFR) of preferably 10 g/10 min to 18 g/10 min as measured at 240°C under a load of 2.16 kgf according to JIS K7210. The thermoplastic elastomer having such properties can be readily molded.

The thermoplastic elastomer serves for considerably enhancing a crack resistance of the endless belt and imparting a flexibility thereto.

When the thermoplastic elastomer is alloyed with the below-mentioned thermoplastic resins, there are preferably used thermoplastic elastomers having a high affinity to the thermoplastic resins such as those thermoplastic elastomers containing functional groups common to those of the thermoplastic resins. The resultant alloyed resin exhibits a good dispersibility between the thermoplastic resins and the thermoplastic elastomers, is considerably enhanced in crack resistance or well controlled in tensile modulus, and, therefore, is excellent in surface smoothness and dispersibility of a conductive substance such as carbon black therein.

Therefore, when polyesters such as polybutylene terephthalate and polyethylene terephthalate, and/or polycarbonates are used as the thermoplastic resin, there are preferably used polyester- based or polyether- based thermoplastic elastomers. Also, when using amide- based thermoplastic resins such as nylons, there are preferably used polyamide- based thermoplastic elastomers.

As the polyester-based elastomers, there may be used polyester polyether block copolymers containing an aromatic polyester moiety as a hard segment and an aliphatic polyether moiety as a soft segment, and polyester polyester block copolymers containing an aromatic polyester moiety as a hard segment and an aliphatic polyester moiety as a soft segment.

Examples of the polyester polyether block copolymers and the polyester polyester block copolymers may include the following block copolymers.

<Polyester polyether block copolymers>

The polyester polyether block copolymers are produced by polycondensing oligomers obtained by subjecting (a) an aliphatic and/or alicyclic diol having 2 to 12 carbon atoms, (b) an aromatic dicarboxylic acid or an alkyl ester thereof, and (c) polyalkylene ether glycol having a weight-average molecular weight of 400 to 6000 as raw materials to esterification reaction or transesterification reaction.

Examples of the aliphatic and/or alicyclic diol (a) having 2 to 12 carbon atoms may include ethyleneglycol, propyleneglycol, trimethyleneglycol, 1, 4- butanediol, 1, 4- cyclohexanediol and 1, 4- cyclcohexanedimethanol. Among these diols, preferred are 1, 4- butanediol and ethyleneglycol. These diols may be used alone or in the form of a mixture of any two or more thereof.

Examples of the aromatic dicarboxylic acid (b) may include terephthalic acid, isophthalic acid and 2,6-naphthalene dicarboxylic acid. Among these aromatic dicarboxylic acids, preferred are terephthalic acid and 2,6-naphthalene dicarboxylic acid. These aromatic dicarboxylic acids may be used alone or in the form of a mixture of any two or more thereof. Examples of the alkyl esters of the aromatic dicarboxylic acids may include dimethyl esters such as dimethyl terephthalate, dimethyl isophthalate, dimethyl phthalate and 2,6-dimethyl naphthalate. Among these esters, preferred are dimethyl terephthalate and 2,6-dimethyl naphthalate. These esters may be used alone or in the form of a mixture of any two or more thereof. Meanwhile, in addition to the above components (a) and (b), a small amount of trifunctional diols, other diols, other dicarboxylic acids and esters thereof, aliphatic dicarboxylic acids such as adipic acid, or alicyclic dicarboxylic acids and alkyl esters thereof may be used as copolymerizable components.

Examples of the polyalkylene ether glycol (c) may include polyethyleneglycol, poly(1,2- or 1,3-propylene ether) glycol, polytetramethylene ether glycol, polyhexamethylene ether glycol, block of random copolymers of ethyleneoxide and propyleneoxide, and block or random copolymers of ethyleneoxide and tetrahydrofuran. Among these compounds, especially preferred are polytetramethylene ether glycols. The weight-average molecular weight of the polyalkylene ether glycol is usually 400 to 6000, preferably 500 to 4000. The amount of the polyalkylene ether glycol blended is usually 5 to 95% by weight, preferably 10 to 85% by weight based on the weight of the obtained block copolymer.

<Polyester polyester block copolymers>

The polyester polyester block copolymers are produced by polycondensing oligomers obtained by subjecting (a) the above aliphatic and/or alicyclic diol having 2 to 12 carbon atoms, (b) the above aromatic dicarboxylic acid or alkyl ester thereof, (d) a polyester oligomer as a condensate of an aliphatic or alicyclic dicarboxylic acid and an aliphatic diol, and (e) a polyester oligomer synthesized from an aliphatic lactone and an aliphatic monool carboxylic acid as raw materials to esterification reaction or transesterification reaction.

Examples of the polyester oligomer (d) may include those polyester oligomers produced by condensing at least one dicarboxylic acid component selected from the group consisting of alicyclic dicarboxylic acids such as 1, 4- cyclohexanedicarboxylic acid, 1, 2- cyclohexanedicarboxylic acid and dicyclohexyl- 4, 4'- dicarboxylic acid, and aliphatic dicarboxylic acids such as succinic acid, oxalic acid, adipic acid and sebacic acid, with at least one diol component selected from the group consisting of diols such as ethyleneglycol, propyleneglycol, tetramethyleneglycol and pentamethyleneglycol.

Examples of the polyester oligomer (e) may include polycaprolactone-based polyester oligomers synthesized from ε-caprolactone, ω-oxycaproic acid, etc.

Examples of the thermoplastic elastomers other than the above polyester-based thermoplastic elastomers may include polystyrene-based thermoplastic elastomers, polyvinyl chloride-based thermoplastic elastomers, olefin-based thermoplastic elastomers, polyester-based thermoplastic elastomers, polyamide-based thermoplastic elastomers and urethane-based thermoplastic elastomers.

Specific examples of the polystyrene- based thermoplastic elastomers may include styrene- butadienestyrene copolymers, styrene- isoprene- styrene copolymers, styrene- ethylene- butylene- styrene copolymers and styrene- ethylene- propylene- styrene copolymers. Examples of the polyvinyl chloride- based thermoplastic elastomers may include crosslinked (three- dimensional) vinyl chloride- linear vinyl chloride polymers, etc.

Specific examples of the olefin- based thermoplastic elastomers may include polyethylene- EPDM copolymers, polypropylene- EPDM copolymers, polyethylene- EPM copolymers and polypropylene- EPM copolymers. Specific examples of the polyester- based thermoplastic elastomers may include PBT (1, 4- butanediol- terephathalic acid condensate)- PTMEGT (polytetramethyleneglycol- terephthalic acid condensate) copolymers, etc.

Specific examples of the polyamide-based thermoplastic elastomers may include copolymers having a basic skeleton composed of nylon oligomer-dicarboxylic acid-polyether oligomer. Examples of the nylon oligomer may include nylon 6, nylon 66, nylon 610, nylon 612, nylon 11 and nylon 12. Examples of the polyether oligomer may include polyether glycol, polypropyleneglycol and polytetramethyleneglycol.

Specific examples of the urethane-based thermoplastic elastomers may include polyurethane-polycarbonate polyol copolymers, polyurethane-polyether polyol copolymers, polyurethane-polycaprolactone polyester copolymers and polyurethane-adipate polyester copolymers.

(B) Thermoplastic resins:

When the thermoplastic resin and the thermoplastic elastomer are alloyed with each other, there are preferably used thermoplastic resins having a high affinity to the thermoplastic elastomers, for example, thermoplastic resins containing functional groups common to those of the thermoplastic elastomers. The resultant alloyed resin exhibits a good dispersibility between the thermoplastic resin and the thermoplastic elastomer, is considerably enhanced in crack resistance and well-controlled in tensile modulus, and is excellent in surface smoothness and dispersibility of a conductive substance such as carbon black therein.

Examples of the thermoplastic resin used in the endless belt of the present invention may include crystalline resins and amorphous resins. Specific examples of the thermoplastic resin may include polypropylene, polyethylene (high- density, medium- density, low- density or linear low- density polyethylenes), propylene- ethylene block or random copolymers, rubbers or latexes such as ethylene- propylene copolymer rubbers, styrene- butadiene rubbers, styrene-butadiene- styrene block copolymers or hydrogenated derivatives thereof, polybutadiene, polyisobutylene, polyamides, polyamide imides, polyacetal, polyarylates, polycarbonates, polymethyl methacrylate, polybutylene terephthalate, polyethylene terephthalate, polyethylene naphthalate, polyimides, liquid crystal polyesters, polysulfones, polyphenylene sulfide, polybisamide triazole, polyether imides, polyether ether ketones, acrylic polymers, polyvinylidene fluoride, polyvinyl fluoride, chlorotrifluoroethylene, ethylene- tetrafluoroethylene copolymers, hexafluoropropylene, perfluoroalkyl vinyl ether copolymers, acrylic alkyl ester copolymers, polyester ester copolymers, polyether ester copolymers, polyether amide copolymers and polyurethane copolymers. These thermoplastic resins may be used alone or in the form of a mixture of any two or more thereof.

Among these thermoplastic resins, preferred are crystalline resins. The crystalline resins are such resins having at least one group selected from the group consisting of a hydroxyl group, a carboxyl group and an ester bond, and any ordinary resins may be used without particular limitations as long as the crystallinity thereof is from 20% to less than 90%.

Among the thermoplastic crystalline resins, preferred are PAT(polyalkylene terephthalate) resins, and more preferred are PBT(polybutylene terephthalate), PET (polyethylene terephthalate) and PEN (polyethylene naphthalate). Of these thermoplastic crystalline resins, still more preferred is PBT because the crystallization velocity thereof is high and, therefore, the crystallinity thereof is kept stable at about 30% with a less change due to molding conditions.

Further, the crystalline resins used in the present invention may also contain copolymerizable components unless the effects of the present invention are adversely affected by addition thereof. Specific examples of the copolymerizable components may include resins containing an ester bond as a main chain into which ester bonds derived from polymethyleneglycol are introduced.

The weight-average molecular weight of the thermoplastic crystalline resins used in the endless belt of the present invention is usually 10,000 to 100,000. When the thermoplastic crystalline resins are required to have high mechanical properties such as high tensile break elongation, the molecular weight thereof should be high, more specifically, is preferably not less than 20,000, more preferably not less than 25,000, still more preferably not less than 30,000.

The amorphous resins as the thermoplastic resins are preferably such resins having at least one group selected from the group consisting of a hydroxyl group, a carboxyl group and an ester bond, and any ordinary resins may be used without particular limitations as long as the crystallinity thereof is in the range of from 0% to less than 10%.

Specific examples of the suitable amorphous resins may include polyesters such as PC (polycarbonates) and PAr (polyarylates), and resins having an ester bond in side chains thereof such as PMMA (polymethyl methacrylate). Among these amorphous resins, preferred are polyesters, and more preferred are PC resins.

Further, the amorphous resins used in the endless belt of the present invention may also contain copolymerizable components unless the effects of the present invention are adversely affected by addition thereof. Specific examples of the copolymerizable components may include resins containing an ester bond as a main chain thereof into which ester bonds derived from polymethyleneglycol are introduced.

The molecular weight of the amorphous resins used in the endless belt of the present invention is not particularly limited, and the weight-average molecular weight thereof is usually 10,000 to 100,000. In the case where the amorphous resins are required to have high mechanical properties such as high tensile break elongation, the molecular weight thereof should be high, more specifically, is preferably not less than 20,000, more preferably not less than 25,000, still more preferably not less than 30,000.

<u><Weight ratio between the thermoplastic resin and the thermoplastic elastomer></u>

The mixing ratio (weight ratio) between the thermoplastic resin and the thermoplastic elastomer used as a molding material for the endless belt of the present invention is not particularly limited. In general, among the thermoplastic resins, the crystalline resins are excellent in chemical resistance and flexing resistance, whereas the amorphous resins are excellent in molding dimensional stability. Therefore, the ratio of the thermoplastic resin to the thermoplastic elastomer is preferably determined according to uses and purposes of the resultant endless belts. For example, the mixing ratio (weight ratio) of the thermoplastic resin to the thermoplastic elastomer is usually 1:99 to 99:1, preferably 5:95 to 95:5, more preferably 10:90 to 90:10, still more preferably 70:30 to 30:70, most preferably 60:40 to 40:60.

When the amount of the thermoplastic elastomer blended is more than the above-specified range, namely when the amount of the thermoplastic resin blended is less than the above-specified range, the resultant belt tends to be too soft and, therefore, undesirably elongated when applying tension thereto, resulting in disturbance of toner images produced. On the contrary, when the amount of the thermoplastic elastomer blended is less than the above-specified range, namely when the amount of the thermoplastic resin blended is more than the above-specified range, the resultant belt tends to be too hard and, therefore, suffer from cracks or roller-reshaping or deformation.

<u><Difference in viscosity between the thermoplastic resin and the thermoplastic elastomer></u>

When the difference in viscosity between the thermoplastic resin and the thermoplastic elastomer is too large, a good dispersion condition therebetween is unobtainable even by controlling the production conditions, thereby failing to obtain a uniform dispersion. Therefore, the difference in viscosity between these components is preferably as small as possible. More specifically, the ratio of MFR of the thermoplastic resin to MFR of the thermoplastic elastomer is preferably 1:20 to 20:1, more preferably 1:10 to 10:1 as measured under the same conditions.

Meanwhile, the MFR value may be measured according to JIS K- 7210 at a temperature close to a molding temperature of the thermoplastic resin composition. For example, when the combination of PBT and a polyester elastomer is used, the MFR values are measured at 240°C as a molding temperature of the composition composed of PBT and the polyester elastomer to compare the viscosity values of the thermoplastic resin and the thermoplastic elastomer with each other. Upon the MFR measurement of the respective resins, the load applied thereto is, for example, 2.16 kg.

<u>(C) Conductive substance:</u>

Various conductive substances may be used without particular limitations as long as they can satisfy properties required upon applications thereof. Specific examples of the conductive filler as the conductive substance may include carbon-based fillers such as carbon black, carbon fibers and graphite, metal-based conductive fillers, and metal oxide-based conductive fillers. In addition to the conductive fillers, examples of the conductive substance may include ionic conductive substances such as quaternary ammonium salts. Among these conductive substances, the carbon black is more preferred since the carbon black tends to reduce a humidity dependency of the electric resistivity. The carbon black may be used in combination with the ionic conductive substances.

The carbon black preferably has a DBP oil absorption of usually 50 to 300 $cm^3$/100g, a specific surface area of usually 35 to 500 $m^2$/g, a volatile content of usually 0 to 20% and an average primary particle size of usually 20 to 50 nm.

<u>1) DBP oil absorption of carbon black:</u>

With the increase in DBP oil absorption of carbon black, the carbon black tends to readily form a continuous beaded chain (carbon structure) and tends to have such an advantage that carbon agglomerates are hardly formed, and the production costs are lowered since the resultant resin composition readily exhibits a good conductivity even when the amount of carbon black added thereto is small. However, the resin composition containing such a carbon black tends to suffer from problems such as fluctuated and unstable electric resistivity due to breakage of carbon chain by various shear forces applied thereto during the period of from blending of respective materials to molding process thereof. On the other hand, when the DBP oil absorption of carbon black is too small, since the carbon black hardly forms a carbon chain structure, a large amount of carbon black must be added to exhibit a suitable conductivity, resulting in poor flexing resistance of the obtained composition. The DBP oil absorption of carbon black is preferably 50 to 300 $cm^3$/100g, more preferably 80 to 240 $cm^3$/100g.

<u>2) Particle size and specific surface area of carbon black:</u>

With the increase in specific surface area of carbon black, the resultant resin composition tends to exhibit a good conductivity even when the amount of carbon black added thereto is small, resulting in advantages such as good mechanical strength and good crack resistance of the composition. However, since the conductivity of the resin composition tends to be abruptly varied by the change in amount of carbon black added thereto, the amount of carbon black blended must be adjusted within an accuracy of $\pm 0.05\%$ in order to control the conductivity to a semiconductor region. Therefore, it may be difficult to suppress fluctuation of the electric resistivity of the endless belt within $\pm 1$ order to obtain a uniform electric resistivity. Further, carbon black having a large specific surface area generally has a small particle size, so that the fine carbon black particles tend to be agglomerated together when dispersed in resins. As a result, the agglomerated carbon particles are included in the resultant molded product, and electrical current tends to be concentrated onto portions where the agglomerated carbon particles exist, resulting in local dielectric breakdown. On the other hand, when the specific surface area of carbon black is too small (the carbon particle size is too large), although the obtained molded product exhibits a smooth appearance due to a less formation of agglomerated carbon particles, the conductivity of the resin composition tends to considerably vary depending upon contact between the carbon particles, resulting in fluctuation of the electric resistivity thereof. Therefore, the carbon black preferably has an average primary particle size of 20 to 50 nm and a specific surface area of 35 to 500 $m^2/g$.

3) Volatile content of carbon black:

With the increase in volatile content of carbon black, the dispersibility of carbon black in resins tends to be improved due to good surface properties thereof. However, a large volatile content of carbon black is disadvantageous from the standpoint of moldability since gases are generated during heat-kneading of the resin composition. On the other hand, although a less volatile content of carbon black is advantageous from the standpoint of moldability since gases are hardly generated during heat-kneading of the resin composition, the carbon black tends to has a poor dispersibility in resins. Therefore, the volatile content of the carbon black is preferably 0 to 20% by weight.
The kind of carbon black used in the present invention is not particularly limited as long as the carbon black satisfies the above DBP oil absorption, specific surface area, volatile content and average primary particle size. Also, the carbon black may be used in the form of a mixture of two or more kinds of carbon blacks.
Examples of the carbon black may include acetylene black, furnace black and channel black. Among these carbon blacks, preferred is acetylene black which contains a less amount of functional groups as impurities and, therefore, hardly causes a defective appearance due to agglomeration of carbon particles. In addition, there may also be used known post-treated carbon blacks such as resin-coated carbon black, heat-treated carbon black, graphitized carbon black and acidified carbon black.
Further, in order to improve the dispersibility of carbon black and suppress generation of gases therefrom, there may also be used carbon blacks which are surface- treated with silane- based, aluminate- based, titanate- based or zirconate- based coupling agents.
In the present invention, from the standpoint of a less .influence on temperature and humidity dependency of resistance values, the carbon black content in the endless belt (hereinafter occasionally referred to as a "carbon black concentration") preferably satisfies the following formulae (4) and (5):

$$\text{Log } Y \geq -X + 20 \qquad (4)$$

$$\text{Log } Y \leq -X + 30 \qquad (5)$$

wherein X is a carbon black content (% by weight) in the endless belt; and Y is a surface resistivity (Q) of the endless belt as measured by applying thereto a voltage of 100V for 10 sec.
For example, in the consideration of a less fluctuation of electric resistivity due to change in environmental conditions from high-temperature and high-humidity conditions to low-temperature and low-humidity conditions, in the case of the endless belt having a surface resistivity of 1 x $10^6$ ($\Omega$), the carbon black concentration therein is preferably 14 to 24% by weight; in the case of the endless belt having a surface resistivity of 1 x $10^{10}$ ($\Omega$), the carbon black concentration in the endless belt is preferably 10 to 20% by weight; and in the case of the endless belt having a surface resistivity of 1 x $10^{14}$ ($\Omega$), the carbon black concentration in the endless belt is preferably 6 to 16% by weight.
In particular, X and Y preferably satisfy the following formulae (6) and (7):

$$\text{Log } Y \geq -X + 21 \qquad (6)$$

$$Log\ Y \leq -X + 29 \qquad (7)$$

When the carbon black concentration in the endless belt is too high, the resultant endless belt product tends to exhibit a poor appearance due to generation of decomposed gases from carbon black itself, and suffer from flaws derived from decomposition and foaming of resins due to the reaction between the carbon black and the resins, resulting in poor appearance and poor folding resistance.

When the carbon black concentration in the endless belt is too low, the resultant endless belt may exhibit a poor conductivity and tends to be deteriorated in dispersibility of carbon black therein, resulting in fluctuation of the electric resistivity thereof. In addition, the endless belt having such a low carbon black concentration tends to exhibit a large contact resistance, and properties thereof tend to be considerably varied depending upon environmental conditions, so that when the endless belt is mounted onto image-forming apparatuses, defective images tend to be produced depending upon the environmental conditions.

(D) Polymerization catalyst:

As the method of alloying the thermoplastic resin with the thermoplastic elastomer, there may be used conventionally known alloying methods such as a method of simply mixing the thermoplastic resin with the thermoplastic elastomer, a method of mixing these components with each other from a polymerization stage thereof, and a method of mixing these components with each other while reacting the respective components in the presence of a catalyst. In particular, among these methods, the method of mixing the thermoplastic resin with the thermoplastic elastomer under heating using a polymerization catalyst is preferred in view of production costs. The polymerization catalyst is not particularly limited as long as the catalyst has a capability of polymerizing the thermoplastic resin and the thermoplastic elastomer.

Among the polymerization catalysts, preferred are Ti-based polymerization catalysts, and more preferred are alkyl titanates, etc.

Examples of the preferred alkyl titanates may include tetrabutyl titanate and tetrakis (2- ethylhexyl) orthotitanate. These alkyl titanates are commercially available under the tradenames "TYZOR TOT" and "TYZOR TBT" both produced by DuPont Corp.

The Ti-based polymerization catalysts are preferably used in combination with alkali metal- or alkali earth metal-containing compounds or zinc-containing compounds to exhibit their catalytic effect more effectively. Among these catalysts, the polymerization catalysts containing magnesium-containing compounds are preferred.

The magnesium-containing compounds are not particularly limited. Among the magnesium-containing compounds, preferred are magnesium salts of organic acids, and more preferred is magnesium acetate.

The content of the polymerization catalyst is preferably adequately large since a too small content of the polymerization catalyst may fail to exhibit an effective catalytic activity thereof. More specifically, the amount of the metal component contained in the polymerization catalyst is preferably not less than 1 ppm, more preferably not less than 10 ppm, still more preferably not less than 20 ppm based on the whole thermoplastic polymer components (sum of the thermoplastic resin and the thermoplastic elastomer). On the other hand, it is known that the ester-based resins are depolymerized in the presence of a large amount of heavy metals. Therefore, when such ester-based resins are used, the content of the polymerization catalyst is preferably relatively low. More specifically, the amount of the metal component contained in the polymerization catalyst is preferably not more than 10000 ppm, more preferably not more than 1000 ppm, still more preferably not more than 500 ppm based on the whole thermoplastic polymer components (sum of the thermoplastic resin and the thermoplastic elastomer). Meanwhile, the weight ratios of Ti and Mg contained in the polymerization catalyst based on the whole thermoplastic polymer components are hereinafter occasionally referred to as "Ti concentration" and "Mg concentration", respectively.

(E) Chelator:

When the polymerization catalyst has a too high catalytic activity, the thermoplastic polymer components tend to undergo accelerated depolymerization, resulting in problems such as deteriorated mechanical properties of the resultant composition due to decrease in molecular weights of the thermoplastic polymer components, and foaming due to production of low-molecular weight compounds. For this reason, a chelator capable of chelating the metals contained in the polymerization catalyst is preferably allowed to exist therein to suppress the depolymerization of the thermoplastic polymer components.

As the chelator, there may be used conventionally known chelators without particular limitations. Examples of the chelator may include esters of phosphiric acid, esters of phosphoric acid, salts of phosphoric acid, and hydrazines.

Specific examples of the chelator may include phosphites such as "IRGAPHOS 168 (tradename)" produced by Nippon Ciba Geigy Co., Ltd., "PEP36 (tradename)" produced by Asahi Denka Kogyo Co., Ltd., and "SANDSTUB P-EPQ (tradename)" produced by Clariant Japan Co., Ltd., and hydrazines such as "IRGANOX MD1024 (tradename)" produced by Nippon Ciba Geigy Co., Ltd., and "CDA-6 (tradename)" produced by Asahi Denka Kogyo Co., Ltd.

In the present invention, when the molding conditions are optimized to suppress the depolymerization and formation of the low-molecular weight compounds, no addition of the chelator is required. However, when it is required to suppress the depolymerization by adding the chelator, the amount of the chelator added is preferably not less than 0.001 part by weight, more preferably not less than 0.1 part by weight based on 100 parts by weight of the whole thermoplastic polymer components.

When the amount of the chelator added is too large, the polymerization catalyst tends to be deactivated, thereby failing to obtain an endless belt having good properties. Therefore, the use of an excess amount of the chelator should be avoided. For example, the upper limit of the amount of the chelator added is preferably 10 parts by weight, more preferably 5 parts by weight based on 100 parts by weight of the whole thermoplastic polymer components.

In general, it is preferred that the chelator is added in an amount as small as not more than 0.1 part by weight based on 100 parts by weight of the whole thermoplastic polymer components. However, in an example of preferred methods using the chelator in the present invention, the polymerization catalyst is preferably added in an amount as large as 50 to 500 ppm, and the chelator is also added in an amount larger than ordinarily used, more specifically, in an amount of preferably 0.1 to 3 parts by weight, more preferably 0.3 to 1 part by weight, and further the molding conditions for producing the endless belt such as temperature and residence time are optimized, so that it is possible to suppress the depolymerization while accelerating production of chemical bonds between the thermoplastic resin and the thermoplastic elastomer and increasing molecular weights thereof, thereby obtaining the endless belt having more excellent properties than those of the conventional endless belts.

(F) Viscous Polymer (thickening agent):

The viscous polymer (thickening agent) contributes to further reducing an applied voltage dependency of the surface resistivity of the endless belt. That is, the endless belt made of the composition composed of the thermoplastic resin, the thermoplastic elastomer and the conductive substance, which contains no viscous polymer (thickening agent) tends to exhibit a large applied voltage dependency of the surface resistivity thereof, thereby failing to obtain an image quality with a high accuracy. The reason therefor is considered to be that since the difference in viscosity between the high-viscous .thermoplastic resin and the low-viscous thermoplastic elastomer is large, the low-viscous thermoplastic elastomer may fail to be fully mixed in the other components upon kneading, resulting in poor dispersibility of the respective components contained in the endless belt. Consequently, in the present invention, in order to increase a viscosity of the mixture composed of the thermoplastic resin, the thermoplastic elastomer and the conductive substance as a whole and control the viscosity such that the respective components of the mixture are sufficiently dispersed even when a considerable amount of the low-viscous thermoplastic elastomer is contained, it is preferred that the viscous polymer (thickening agent) is added to the mixture.

The viscous polymer (thickening agent) used in the present invention has an MFR value of usually 0.01 to 10 g/10 min, preferably 0.05 to 5 g/10 min, more preferably 0.1 to 3 g/10 min as measured at 190°C under a load of 2.16 kgf according to JIS K7210. When the MFR value of the thickening agent is less than 0.01 g/10 min, the viscosity of the mixture tends to be too high, thereby failing to fully knead the respective components of the mixture with each other. When the MFR value of the thickening agent is more than 10 g/10 min, the viscosity of the thickening agent tends to be too low, thereby failing to exhibit a sufficient thickening effect.

Examples of the viscous polymer (thickening agent) used in the present invention may include polymers containing an epoxy group such as a glycidyl methacrylate group. The epoxy group having a high reactivity causes the increase in molecular weights of the respective resin components by reacting with the thermoplastic resin or the thermoplastic elastomer upon kneading, thereby obtaining a very large thickening effect. Specific examples of the epoxy-containing polymers may include "MODIPER A4200 (tradename)" as ethylene-glycidyl methacrylate copolymer (EGMA) grafted with PMMA, and "MODIPER A4400 (tradename)" as EGMA grafted with acrylonitrile-styrene copolymer (AS) both produced by Nippon Yushi Co., Ltd.

The amount of the viscous polymer (thickening agent) added is usually 0.01 to 20 parts by weight, preferably 0.05 to 10 parts by weight, more preferably 0.1 to 10 parts by weight, still more preferably 0.1 to 5 parts by weight based on 100 parts by weight of the whole thermoplastic polymer components. When the amount of the viscous polymer added is less than 0.01 part by weight, the thickening effect tends to be insufficient. When the amount of the viscous polymer added is more than 20 parts by weight, the resultant mixture tends to exhibit a too high viscosity, thereby failing to fully knead the respective components of the mixture with each other.

(G) Additional blending components (optional components):

The endless belt of the present invention may be optionally blended with the following components according to various purposes and applications.

Specific examples of the optional components may include various additives, e.g., antioxidants such as "IRGAPHOS 168", "IRGANOX 1010" and phosphorus-based antioxidants, heat stabilizers, various plasticizers, light stabilizers, ultraviolet absorbers, neutralizing agents, lubricants, anti-fogging agents, anti-blocking agents, slipping agents, crosslinking agents, crosslinking assistants, colorants, flame retardants and dispersants. In particular, for the purposes of enhancing a releasability between toner and the endless belt as well as a cleanability of a cleaning blade for wiping off residual toner on the endless belt, it is preferred to add montan waxes such as acid waxes, ester waxes, partially saponified ester waxes and metal salts of montanic acid, or polyolefin waxes such as polyethylene waxes, polypropylene waxes, oxidized polypropylene waxes, oxidized HDPE waxes, EVA waxes and finely divided waxes.

Further, the endless belt may be blended with various thermoplastic resins, various elastomers, thermosetting resins, fillers, etc., as the second or third blending component, unless the effects of the present invention are adversely affected by addition of these components.

Examples of the thermoplastic resins as the additional blending components may include polypropylene, polyethylene (high- density, medium- density, low- density and linear low- density polyethylenes) , propylene- ethylene block or random copolymers, rubbers or latexes such as ethylene- propylene copolymer rubbers, styrene- butadiene rubbers and styrene- butadiene- styrene block copolymers or hydrogenated derivatives thereof, polybutadiene, polyisobutylene, polyamides, polyamide imides, polyacetal, polyarylates, polycarbonates, polymethyl methacrylate, polybutylene terephthalate, polyethylene terephthalate, polyethylene naphthalate, polyimides, liquid crystal polyesters, polysulfones, polyphenylene sulfide, polybisamide triazole, polyether imides, polyether ether ketones, acrylic polymers, polyvinylidene fluoride, polyvinyl fluoride,  chlorotrifluoroethylene, ethylene- tetrafluoroethylene copolymers, hexafluoropropylene, perfluoroalkyl vinyl ether copolymers, acrylic alkyl ester copolymers, polyester ester copolymers, polyether ester copolymers, polyether amide copolymers and polyurethane copolymers. These thermoplastic resins may be used alone or in the form of a mixture of any two or more thereof.

Examples of the thermosetting resins as the additional blending components may include epoxy resins, melamine resins, phenol resins and unsaturated polyester resins. These thermosetting resins may be used alone or in the form of a mixture of any two or more thereof.

Examples of the fillers as the additional blending components may include calcium carbonate (heavy or light), talc, mica, silica, alumina, aluminum hydroxide, zeolite, wollastonite, diatomaceous earth, glass fibers, glass beads, bentonite, asbestos, hollow glass balls, graphite, molybdenum disulfide, titanium oxide, carbonate fibers, aluminum fibers, styrene steel fibers, brass fibers, aluminum powder, wood flour, chaffs, graphite, metal powder, conductive metal oxides, organometallic compounds and organic metal salts. Examples of the additives may include antioxidants such as phenol-based, sulfur-based and phosphate-based antioxidants, lubricants, various organic and inorganic pigments, ultraviolet-shielding agents, antistatic agents, dispersants, neutralizing agents, foaming agents, plasticizers, copper inhibitors, flame retardants, crosslinking agents and flow modifiers.

(2) Properties of endless belt:

(a) Surface resistivity and volume resistivity:

The endless belt for image-forming apparatuses according to the present invention exhibits a surface resistivity and a volume resistivity which satisfy the following formulae (1), (2) and (3):

$$SR(100V)/SR(500V) < VR(100V)/VR(250V) \quad (1)$$

$$SR(100V)/SR(500V) \leq 30 \quad (2)$$

$$8 \leq VR(100V)/VR(250V) \leq 100 \quad (3)$$

wherein SR(100V) represents a surface resistivity as measured by applying a voltage of 100V to the endless belt for 10 sec, SR(500V) represents a surface resistivity as measured by applying a voltage of 500V to the endless belt for 10 sec, VR(100V) represents a volume resistivity as measured by applying a voltage of 100V to the endless belt for 10 sec, and VR(250V) represents a volume resistivity as measured by applying a voltage of 250V to the endless belt for 10 sec.

That is, the change ratio (SR (100V) /SR (500V) ) represented by ratio of a maximum value to a minimum value (MAX/MIN) of the surface resistivity as measured by applying a voltage of 100 to 500 V to the endless belt (hereinafter occasionally referred to as a "surface resistivity change ratio") is usually not more than 30 times; the change ratio (VR (100V) /VR (250V) ) represented by a ratio of a maximum value to a minimum value (MAX/MIN) of the volume resistivity as measured by applying a voltage of 100 to 250 V to the endless belt (hereinafter occasionally referred to as a "volume resistivity change ratio") is usually 8 to 100; and the surface resistivity change ratio (SR (100V) /SR (500V) ) is smaller than the volume resistivity change rate (VR (100V) /VR (250V) ) (i.e., (SR (100V) /SR (500V) ) < (VR (100V) /VR (250V) ) ) .

The small surface resistivity change ratio is preferred for conducting a uniform transfer of toner even upon change in voltage applied by rollers, etc. The volume resistivity change ratio larger than the surface resistivity change ratio has not only the effect of facilitating a cleaning operation by a cleaning member because of self-destaticization of residual charged toner remaining on the belt which remains thereon without undergoing the secondary transfer, but also the effect of enhancing a transfer efficiency of the toner on the belt upon the secondary transfer.

The surface resistivity change ratio (SR (100V) /SR (500V) ) is preferably within 10 times, and the surface resistivity change ratio (SR (100V) /SR (500V) ) and the volume resistivity change ratio (VR (100V) /VR (250V) ) preferably have such a relationship that the value which is 2 times the surface resistivity change ratio is not larger than the volume resistivity change ratio. Meanwhile, the lower limit of the surface resistivity change ratio is not particularly limited, and usually about 1.5.

When the volume resistivity change ratio (VR (100V) /VR (250V) ) is too large, there tends to arise such a problem that current leakage is caused due to the change in voltage applied. Therefore, the volume resistivity change ratio (VR (100V) /VR (250V) ) is usually within 100 times, preferably within 50 times. Meanwhile, the lower limit of the volume resistivity change ratio (VR (100V) /VR (250V) ) is preferably 8, more preferably 10 in the consideration of imparting the self- destaticization performance to the belt.

Therefore, the endless belt for image- forming apparatuses according to the present invention has properties which more preferably satisfies the following formulae (8) to (10) :

$$\mathrm{SR(100V)/SR(500V) \ x \ 2 \ < \ VR(100V)/VR(250\textit{V})} \qquad (8)$$

$$\mathrm{1 \ \le \ SR(100V)/SR(500V) \ \le \ 10} \qquad (9)$$

$$\mathrm{10 \ \le \ VR(100V)/VR(250V) \ \le \ 50} \qquad (10)$$

Meanwhile, although the resistivity range of the endless belt for image- forming apparatuses according to the present invention may vary depending upon the applications thereof, the surface resistivity thereof is usually $1 \times 10^6$ to $1 \times 10^{14}$ $\Omega$, and the volume resistivity thereof is usually $1 \times 10^6$ to $1 \times 10^{14}$ $\Omega \cdot$cm.

The more preferred range of the above resistivity range also varies depending upon applications of the endless belt. For example, in the case where the endless belt is used as a photosensitive belt, in order to allow electric charges on an outer surface thereof to leak toward an inner surface thereof, if required, the surface resistivity thereof is preferably controlled to a lower range, i.e., $1 \times 10^1$ to $1 \times 10^9$ $\Omega$ and the volume resistivity thereof is preferably controlled to a lower range, i.e., $1 \times 10^1$ to $1 \times 10^9$ $\Omega \cdot$cm. In the case where the endless belt is used as an intermediate transfer belt, in order to facilitate electrification and transfer operations thereof, the surface resistivity thereof is preferably controlled to $1 \times 10^6$ to $1 \times 10^{13}$ $\Omega$ and the volume resistivity thereof is preferably controlled to $1 \times 10^6$ to $1 \times 10^{13}$ $\Omega \cdot$ cm. In the case where the endless belt is used as a transporting transfer belt, in order to facilitate electrification operation thereof and prevent damage thereto even upon applying a high voltage thereto, the surface resistivity thereof is preferably controlled to a higher range, i.e., $1 \times 10^{10}$ to $1 \times 10^{16}$ $\Omega$ and the volume resistivity thereof is preferably controlled to a higher range, i.e., $1 \times 10^{10}$ to $1 \times 10^{16}$ $\Omega \cdot$cm.

Also, the distribution of the surface resistivity in one endless belt is preferably as narrow as possible, and in the respective preferred surface resistivity regions, the difference between the maximum and minimum values in the one endless belt is preferably within two digits, namely the maximum value is preferably less than 100 times the minimum value.

Meanwhile, the surface resistivity and volume resistivity of the endless belt may be readily measured, for example, by "HIRESTER UP (tradename) " and "LORESTER (tradename) " both manufactured by Dia- Instruments Co., Ltd., and "R8340A (tradename) " manufactured by Advantest Co., Ltd.

(b) Tensile modulus:

The tensile modulus of the endless belt of the present invention is usually 300 to 2500 MPa. When the tensile modulus of the endless belt is too low, for example, in the case where the endless belt is used as an intermediate transfer belt in image-forming apparatuses, slight elongation of the belt tends to be caused due to a tensile force thereof, resulting in defects such as color deviation. On the other hand, when the tensile modulus of the endless belt is too high, a load applied to a motor upon driving the belt tends to be increased, so that it is required to reduce a thickness of the belt. In this case, once dusts or foreign matters enter between rollers and the belt, the endless belt tends to be flawed due to frictional contact with the photosensitive member and finally suffer from cracks due to the resultant flaws, resulting in poor reliability of the endless belt. In addition, in order to enhance a toner transfer efficiency upon the primary transfer, the endless belt is required to exhibit a good tensile modulus to such an extend as to inhibit undesirable elongation thereof and not to make the belt too hard. The tensile modulus of the endless belt is preferably 300 to 2500 MPa, more preferably 500 to 2000 MPa, still more preferably 600 to 1800 MPa.

The tensile modulus of the endless belt may be controlled from the standpoint of enhancing the toner transfer efficiency, and may be appropriately determined in the consideration of the relationship between the effect of enhancing the toner transfer efficiency owing to chemical properties on the surface of the belt (contact angle with water) and the effect of enhancing the toner transfer efficiency owing to electrical properties thereof.

(c) Contact angle with water:

The contact angle between an outer surface of the endless belt of the present invention and water is usually from 60° to less than 90°, preferably 65° to 85°. When the contact angle between the outer surface of the endless belt and water is less than 60°, the toner tends to be adhered onto the surface of the endless belt and formed into a film shape, resulting in deteriorated secondary toner transfer efficiency. When the contact angle between the outer surface of the endless belt and water is not less than 90°, the primary toner transfer efficiency tends to be deteriorated.

(d) Surface roughness Ra:

The surface roughness Ra of the endless belt of the present invention is usually 0.05 to 0.3 $\mu$m, preferably 0.07 to 0.2 $\mu$m. When the surface roughness Ra of the endless belt is less than 0.05 $\mu$m, the primary toner transfer efficiency tends to be deteriorated. When the surface roughness Ra of the endless belt is more than 0.3 $\mu$m, the secondary toner transfer efficiency tends to be deteriorated.

(e) Fold endurance frequency:

For example, in the case where the endless belt of the present invention is used as an intermediate transfer belt in image-forming apparatuses, the endless belt preferably exhibits a good flexing resistance, since the intermediate transfer belt having a poor flexing resistance tends to suffer from cracks, thereby failing to obtain a good image quality.

The degree of the flexing resistance may be quantitatively determined by the method of measuring a fold endurance frequency according to JIS P-8115. The larger the fold endurance frequency, the more hardly the endless belt suffers from cracks, and the more excellent the flexing resistance thereof becomes.

More specifically, when the fold endurance frequency of the endless belt is usually more than 5000 times, the endless belt can exhibit an excellent belt performance during a life of the apparatus. Upon practical use, the fold endurance frequency of the endless belt is preferably not less than 8000 times, more preferably not less than 10000 times.

The fold endurance frequency of the endless belt of the present invention can be increased to usually not less than 50000 times, preferably not less than 100000 times by controlling an amount of the thermoplastic elastomer added and using alloyed resins. As a result, the endless belt can exhibit a sufficient crack resistance without subjecting the belt to secondary processing using a reinforcing tape, etc., which is ordinarily conducted to prevent occurrence of cracks at ends of the belt.

(f) Shrinkage percentage:

The shrinkage characteristics of the endless belt of the present invention is controlled such that a shrinkage percentage thereof is usually not more than 0.2%, preferably not more than 0.1%, more preferably not more than 0.05% as measured at a temperature of 23°C and a humidity of 50% after allowing the belt to stand at a temperature of 60°C and a humidity of 90% for 24 hours. When the shrinkage percentage of the endless belt is more than the above-specified range, the endless belt tends to suffer from not only a large dimensional change during transportation and storage thereof, but also undesirable change in electrical properties and mechanical properties thereof.

(g) Thickness of endless belt:

When the thickness of the endless belt is too large and the endless belt has a large radius of curvature relative to rollers, the difference in degree of deformation between inside and outside of the endless belt tends to be increased, resulting in formation of cracks. Further, the toner transferred to the outside portion of the endless belt tends to be deformed and scattered, resulting in deformed images. On the other hand, when the thickness of the endless belt is excessively small, the endless belt tends to suffer from cracks owing to dusts or foreign matters entering into a small space between rollers and the belt and flaws due to contact with the photosensitive member, resulting in severe damage to the endless belt. Therefore, the thickness of the endless belt of the present invention is preferably 70 to 300 $\mu$m, more preferably 100 to 200 $\mu$m.

That is, in the endless belt for image-forming apparatuses according to the present invention, the tensile modulus thereof is usually 300 to 2500 MPa, the contact angle between the outer surface of the endless belt and water is usually from 60° to less than 90°, and the surface roughness Ra thereof is usually 0.05 to 0.3 $\mu$m. Thus, the endless belt having a tensile modulus of usually 300 to 2500 MPa which is neither too hard nor too soft can exhibit not only the effect of wiping off the residual toner from the photosensitive member in the primary transfer section, but also the effect of enhancing the toner transfer efficiency even onto rough surface papers in the secondary transfer section. Further, since the contact angle of the belt with water as an index of a surface wettability of the belt is usually from 60° to less than 90°, the endless belt exhibits characteristics which are neither hydrophilic nor hydrophobic. The characteristics of the endless belt are effective to enhance the toner transfer efficiency in the primary transfer section. Further, when the toner releasability in the secondary transfer section is adequately compensated by controlling electrical properties and elastic properties of the belt, both the primary and secondary transfer efficiencies of the toner can be enhanced.

In addition, the surface roughness Ra of the endless belt which lies in the range of usually 0.05 to 0.3 $\mu$m which indicates that the surface is adequately rough, is effective to enhance both the primary and secondary toner transfer efficiencies.

The present inventors have noticed the tensile modulus, surface wettability, surface roughness and toner transfer efficiency of the endless belt containing the alloyed material of the thermoplastic resin and the thermoplastic elastomer, and first examined the adhesion force between the toner and the transfer belt, and the toner transfer property in the secondary transfer section.

It is considered that the adhesion force between the toner and the transfer belt in the secondary transfer section generally includes the following forces.

(a) Intermolecular attraction force between the transfer belt and toner particles, namely so-called van der Waals force.
(b) Image force electrically acting on the charged toner.
(c) Contact electrification force produced by contacting the toner with the transfer belt.
(d) Liquid crosslinking force due to the effect of water existing between the toner and the transfer belt.

Therefore, the toner transfer conditions in the secondary transfer section are essentially controlled such that the total adhesion force including the above forces (a) to (d) is overcome by Coulomb force produced by applying a reverse- directional electric field to the toner.

Consequently, it is considered that the following conditions (e) to (h) are effective for reducing the adhesion force between the belt and the toner in the secondary transfer section.

(e) Adequate roughness of the surface of the transfer belt decreases the van der Waals force and, therefore, reduces the adhesion force between the toner and the transfer belt, and as a result, contributes to enhancement in the secondary transfer efficiency.
(f) Reduced electric resistivity of the transfer belt contributes to facilitated destaticization of the charged toner on the transfer belt and, therefore, is advantageous to enhance the secondary transfer efficiency.
(g) Small difference in frictional electrification rank between the toner and the transfer belt is effective to reduce a contact electrification force therebetween.
(h) Hydrophobicity of the surface of the transfer belt contributes to reduction of the liquid crosslinking force and is effective to reduce the adhesion force of the toner.

That is, in order to enhance the secondary transfer efficiency, the above measures (e) to (h) are generally considered to be effective. On the other hand, in the case of the primary transfer, all of these measures cause adverse effects.

Under these circumstances, the present inventors have found that the belt performance required for enhancing the primary and secondary toner transfer efficiencies is shared by the respective belts. Specifically, it is considered that upon transfer of the toner, in addition to the electrostatic Coulomb force, a mechanical force, namely a tackiness is imparted to the belt.

(a) Toner adhesion force upon the secondary transfer is reduced by the belt having such electric resistivity characteristics as to exhibit a self-destaticization (i.e., the volume resistivity has an adequate voltage dependency).

(b) Toner adhesion force upon the primary transfer is enhanced by using the belt produced from a soft material and causing the surface of the belt to exhibit as low a hydrophobicity as possible.

Further, the present inventors have considered that both the primary and secondary toner transfer efficiencies can be enhanced at the same time by combining the above conditions (a) and (b) with each other. Thus, the present inventors have noticed the thermoplastic elastomer as a means capable of controlling an elastic modulus of the transfer belt without damaging a mechanical strength of the belt, and have conducted studies on alloys of the thermoplastic elastomer and the thermoplastic resin. As a result, the present inventors have found that the voltage dependency of the electric resistivity values capable of satisfying the above formulae (1) to (3) , adequate elastic modulus, and adequate surface wettability and surface roughness can contribute to enhancement in the primary and secondary transfer efficiencies.

Further, when carbon black having a DBP oil absorption of usually 50 cm$^3$/ 100g to 300 cm$^3$/ 100g, a specific surface area of usually 35 to 500 m$^2$/g, a volatile content of usually not more than 20% and an average primary particle size of usually 20 to 50 nm, and satisfying the above formulae (4) and (5) , is blended as the conductive substance in the alloyed resin, it is possible to attain a good temperature/ humidity environmental stability as well as a uniformity of the electric resistivity.

<u>(3) Process for producing the endless belt:</u>

<u>(a) Heat-kneading and molding:</u>

In the present invention, the endless belt may be produced either by heat-kneading the thermoplastic elastomer, the thermoplastic resin and the conductive substance with each other to obtain a thermoplastic resin composition and then molding the thermoplastic resin composition into a belt shape, or by directly molding into a belt shape while heat-kneading the thermoplastic elastomer, the thermoplastic resin and the conductive substance.

In this case, either at the stage of obtaining the thermoplastic resin composition or at the stage of molding the resin composition into a belt shape, the heat-kneading conditions are controlled so as to attain a desired surface resistivity value of the resultant belt. In any cases, since it is required that the resin composition is kept in a molten state to allow the respective components thereof to be fully dispersed, the heating temperature is preferably appropriately high. More specifically, the lower limit of the heating temperature is preferably a melting point of the crystalline resin, more preferably the melting point + 10°C. On the other hand, when the heating temperature is too high, the resin composition tends to suffer from thermal decomposition, resulting in deteriorated properties thereof. Therefore, the upper limit of the heating temperature is preferably the melting point of the crystalline resin + 80°C, more preferably the melting point + 60°C.

In addition, the raw materials dried before the heat-kneading may provide an endless belt having good properties. Therefore, the raw materials are preferably subjected to drying treatment before the heat-kneading. Also, in some cases, the heat-kneaded thermoplastic resin composition may be heat-treated at a temperature lower than the melting point thereof to form ester bonds therein, and then molded into the endless belt.

In the present invention, it is considered that the specific dispersing condition (alloyed condition) of the thermoplastic elastomer and the thermoplastic resin serves for well dispersing the conductive substance in the endless belt and forming an adequate roughness on the surface thereof, thereby enabling production of an endless belt which is excellent in both toner transfer property and toner releasability. Therefore, the heat-kneading temperature and heat-receiving time are important. For this reason, the heat-kneading conditions are preferably determined while monitoring the dispersing condition of the resultant endless belt. Indices usable for determining the alloyed condition of the endless belt include the above voltage dependency of the electric resistivity, distribution of the electric resistivity and ratio between the surface resistivity and the volume resistivity.

The heat-kneading method is not particularly limited, and any conventionally known techniques may be used therefor. For example, as long as the thermoplastic elastomer, the thermoplastic resin and the conductive substance together with the other optional components, if required, can be suitably heat-kneaded with each other to form a resin composition, a single-screw extruder, a twin-screw kneading extruder, a Banbury mixer, rolls, a brabender, a plastograph, a kneader, etc., may be used without particular limitations.

In particular, there is preferably used the method of mixing the thermoplastic resin, the thermoplastic elastomer and the conductive substance as well as the other optional components, if required, with each other using a twin-screw .kneading extruder, pelletizing the resultant mixture, and then molding the obtained pellets into an endless belt.

The molding method is not particularly limited. The endless belt may be produced by known molding methods such as a continuous melt-extrusion molding method, an injection-molding method, a blow-molding method, an inflation molding method, a centrifugal molding method and a rubber extrusion method. Among these methods, preferred is the continuous melt-extrusion molding method. More specifically, preferred is such an extrusion molding method in which a molten tube is extruded through a circular die, and then taken up while cooling or cooling and solidifying the tube, and more preferred is an inside cooling mandrel method of a downward extrusion type or a vacuum sizing method which are capable of controlling an inner diameter of the tube at a high accuracy. In particular, as the molding method for production of belts for image-forming apparatuses, still more preferred is the inside cooling mandrel method which is capable of readily producing a seamless endless belt. In this molding method, it is preferred that by using the circular die having a plurality of temperature control mechanisms disposed along a circumferential direction thereof, an inside or outside of the tube extruded therethrough is contacted with a mold whose temperature is usually controlled to 30 to 150°C to cool the molten tube, and the thus obtained molten tube is taken up while keeping a cylindrical shape thereof.

Meanwhile, in this case, the melt- viscosity of the molding material is adjusted such that the MFR value thereof is usually not less than 0.1 g/ 10 min, preferably not less than 0.5 g/ 10 min, more preferably not less than 1 g/ 10 min as measured at 240°C under a load of 2.16 kgf. When the MFR value of the molding material is less than 0.1 g/ 10 min, a fluidity of the molding material tends to be insufficient upon extrusion molding thereof, thereby failing to be well extrusion-molded and well controlled in resistivity owing to a large shear force applied to the molten resin. On the other hand, when the melt- viscosity of the molding material is excessively high, the melt tension of the molding material tends to be lowered, so that it may be difficult to keep a tube shape of the molten material during the period of from melting to cooling and solidifying. The upper limit of the MFR value is preferably 25 g/ 10 min, more preferably 20 g/ 10 min, still more preferably 10 g/ 10 min. Accordingly, in order to allow the molding material to exhibit such a melt- viscosity, the viscosity of the molding material is preferably controlled, if required, by adding a viscous polymer (thickening agent) thereto.

Further, a film with fold line which is once produced by inflation- molding method, may be post- treated to apparently eliminate the fold line, and such a film may be suitably used as the endless belt without problems. Alternatively, a strip- like sheet may be once processed and then bonded at opposite ends thereof to form a seamed endless belt. As the take- up method, there is preferably used such a molding method in which the tube is taken up while keeping its cylindrical shape without flattening.

Thus, by optimizing the temperature and residence time upon molding, there can be obtained an endless belt having good properties. Therefore, these conditions may be preferably controlled according to blending conditions of the respective components.

(d) Heat treatment:

The resultant endless belt may be heat-treated to produce an endless belt which is further improved in properties, in particular, improved in fold endurance frequency and tensile modulus.

The heat-treating conditions may vary depending upon raw resins used, and the heat-treating temperature is usually 60 to 200°C, preferably 70 to 120°C, and the heat-treating time is usually about 5 to 60 min, preferably about 10 to 30 min. The heat treatment of the endless belt may be conducted either by tensioning the belt between two or more rollers while driving the belt, or by fitting the belt around a cylindrical mold, or the cylindrical endless belt may be directly heat-treated.

More specifically, the tube of a circular shape in section is extruded through a circular die by a continuous extrusion-molding method, taken up while keeping its cylindrical shape, and then laterally cut into an endless belt, thereby achieving low production costs and good dimensional stability at the same time. In addition, by arranging a plurality of the temperature control mechanisms on the circular die along a circumferential direction thereof, it is possible to produce an endless belt having a narrow distribution of the electric resistivity at low costs.

(4) Alloyed resin-dispersing condition of endless belt and dispersing condition of conductive substance therein:

In general, when two kinds of materials are melt-mixed with each other, there exist two different cases, i.e., the case where these materials are completely mixed with each other (occasionally referred to as "completely compatibilized case"), and the case where these materials fail to be completely mixed with each other and form a sea/island structure. In the latter case, in general, when both the materials have a large difference between volume fractions thereof, the material having a larger volume fraction tends to form a sea structure, and the material having a smaller volume fraction tends to form an island structure. Whereas, when both the materials have a small difference between volume fractions thereof, the difference in melt viscosity therebetween gives influence on formation of the sea/island structure such that the material having a smaller melt viscosity tends to form a sea structure, and the material having a larger melt viscosity tends to form an island structure.

In the alloyed structure of the present invention, the sea/island structure in the vicinity of an inner surface portion thereof (inside surface portion in a thickness direction of the endless belt) may be the same as or different from the sea/ island structure in the vicinity of an intermediate portion thereof (portion between outer and inner surface portions in the thickness direction of the endless belt). Further, both the materials may be mutually mixed with each other such that islands having a size of not more than 100 nm are dispersed in the sea portion.

In the present invention, irrespective of the sea/island structure of the alloyed resin, it is important that the dispersing condition of the conductive substance is substantially identical or uniform in both the intermediate portion and the outer surface portion (outside surface portion in the thickness direction of the endless belt). More specifically, even though the materials forming the sea/island structure are controlled optimally, shapes of sea and island portions in the sea/island structure are optionally varied depending upon various molding conditions including orientation of molten resins and stress applied to the molten resins during the molding procedure (shear stress, shear rate) as well as shear history and orientation, shear stress and shear rate in the course of cooling the molten resins. Further, in the materials blended with a conductive filler such as carbon black as the conductive substance, the dispersing condition of the conductive substance in the thickness direction of the endless belt is also varied depending upon shear force and orientation thereof. Therefore, it is important to well control the dispersing condition of the conductive substance in the thickness direction of the endless belt.

That is, as a result of the present inventors' studies, it has been found that such an endless belt in which the dispersing condition of the conductive substance in the vicinity of the outer surface portion of the endless belt is substantially identical to the dispersing condition of the conductive substance in the vicinity of the intermediate portion thereof can exhibit a less voltage dependency of the surface resistivity. This indicates that although the outside portion and the inside portion of the endless belt are different in resin orientation from each other, it is important that the dispersing condition of the conductive substance is adequately uniform over these portions.

In addition, under ordinary melt-mixing and heat-extruding conditions, the size of dispersed particles in the island portion in the sea/island structure is reduced only to about 50 $\mu$m to 100 nm. However, under some heat-mixing and extruding conditions, the dispersed particles are finely divided until reaching a dispersed particle size of several nm or less. In particular, the material having a dispersed particle size of not more than 100 nm is more preferred, since such a material not only has the effect of considerably enhancing a mechanical strength thereof, but also is appropriately enhanced in melt viscosity, thereby exhibiting the effect of uniformly dispersing the conductive substance therein.

Further, in the case where two kinds of materials are alloyed with each other, or fillers, etc., are added thereto, the heat- melted polymer materials tends to undergo the change in structure thereof during the cooling process. For example, when the alloyed materials are rapidly cooled, the materials to be inherently crystallized may fail to be well crystallized, and tends to remain in an amorphous state in the presence of fillers, etc. As a result, the resultant molded product may undergo crystallization again when exposed to a high temperature condition, resulting in considerable shrinkage of the molded product as well as considerable deterioration in mechanical strength thereof. Therefore, sufficient care should be taken in the above procedure.

To avoid the above problems, among the components to be alloyed, the crystallizable components preferably have a crystallized structure as the molding material. That is, although it is suitable to heat-treat these crystallizable components, from the standpoint of costs, a slow cooling means is preferably used upon molding so as to fully conduct the crystallization thereof during continuous production process thereof.

Meanwhile, in the present invention, methods of identifying a shape of the island portion in the sea/ island structure are not particularly limited, and there may be used conventionally known methods such as a method of cutting the endless belt in a predetermined direction to prepare an extra- thin piece, dyeing the piece with a dye such as ruthenium tetraoxide ($RuO_4$) for not less than 2 min, and then observing the dyed piece using TEM (transmission electron microscope) or SEM (scanning electron microscope) .

Meanwhile, upon the observation, particular care should be taken because the sectional configuration of the sea/ island structure is varied according to the cutting direction of thickness of the endless belt. For this reason, the piece obtained by cutting the endless belt in a circumferential direction thereof and the piece obtained by cutting the endless belt in a width direction thereof are prepared to observe the respective sea/ island structures thereof at the outside portion ranging from 0 $\mu$m to about 5 $\mu$m, the intermediate portion ranging within about $\pm 5$ $\mu$m from the mid of thickness, and the inside portion ranging from 0 $\mu$m to about 5 $\mu$m.

<u>(5) Uses and applications of endless belt for image-forming apparatuses:</u>

The applications of the endless belt for image-forming apparatuses according to the present invention are not particularly limited. The endless belt of the present invention may be used in applications such as OA devices which require strict properties such as dimensional accuracy, flexing resistance and tensile modulus, in particular, , suitably used as a functional member. The endless belt is preferably in the form of a seamless belt since such a seamless belt is less susceptible to defects such as cracks and elongation.

The endless belt for image-forming apparatuses according to the present invention may be suitably used, in particular, as an intermediate transfer belt, a transporting transfer belt, a photosensitive belt, etc., for image-forming apparatuses such as electrophotographic copying machines, laser beam printers and facsimiles.

The endless belt of the present invention may be directly used as these belts, or may be fitted around a drum or tensioned between rolls.

Further, for the purpose of reinforcing end faces of the endless belt, a reinforcing tape such as a heat- resisting tape may be attached to inner and/or outer surfaces of the belt along side peripheries thereof, if required. As the reinforcing tape, biaxially stretched polyester tapes are preferably used in view of a good mechanical strength thereof. The width of the reinforcing tape is preferably 4 to 20 mm in view of compactness of layout of the apparatus, and the thickness of the reinforcing tape is preferably 20 to 200 $\mu$m from the standpoints of driving the endless belt under a low tension to keep its flexibility thereof, and preventing occurrence of cracks thereon.

Further, for the purpose of preventing meandering motion of the endless belt, a rubber sheet (meander- preventing guide) of urethane rubbers, silicone rubbers, etc., may be attached to side peripheries of the endless belt with an adhesive. In this case, the width of the rubber sheet used is preferably 2 to 10 mm, more preferably 3 to 8 mm in view of a good layout of the apparatus and a high adhesion strength. The thickness of the meander- preventing rubber sheet is preferably 0.5 to 3 mm in view of preventing the meandering motion of the endless belt, more preferably 0.7 to 2 mm in view of facilitated bonding and the effect of preventing the meandering motion of the endless belt.

Further, the reinforcing tape is preferably used in combination with the meander- preventing guide since the effect of preventing occurrence of cracks and the effect of preventing the meandering motion of the endless belt can be achieved at the same time.

Thus, the endless belt for image- forming apparatuses according to the present invention can be suitably used in the form of a seamless belt, in particular, as an intermediate transfer belt, a transporting transfer belt, a transfer fixing belt, a fixing belt, a photosensitive belt or a developing sleeve.

Next, the endless belt according to the present invention is explained.

In the present invention, there is provided an endless belt for image-forming apparatuses, containing a blended mixture of a thermoplastic elastomer, a thermoplastic resin and a conductive substance, the said endless belt satisfying the following formulae (1), (2) and (3):

$$SR(100V)/SR(500V) < VR(100V)/VR(250V) \quad (1)$$

$$SR(100V)/SR(500V) \leq 30 \quad (2)$$

$$8 \leq VR(100V)/VR(250V) \leq 100 \quad (3)$$

wherein SR(100V) represents a surface resistivity as measured by applying a voltage of 100V to the endless belt for 10 sec, SR(500V) represents a surface resistivity as measured by applying a voltage of 500V to the endless belt for 10 sec, VR(100V) represents a volume resistivity as measured by applying a voltage of 100V to the endless belt for 10 sec, and VR(250V) represents a volume resistivity as measured by applying a voltage of 250V to the endless belt for 10 sec.

In the endless belt according to the present invention, the condition in which the above formula (1) is satisfied means that the voltage dependency of the volume resistivity is larger than the voltage dependency of the surface resistivity. Also, the condition in which the above formulae (2) and (3) are satisfied means that the voltage dependency of the surface resistivity is small, and the voltage dependency of the volume resistivity is adequately large.

Thus, in the case where the voltage dependency of the volume resistivity is larger than the voltage dependency of the surface resistivity, and the voltage dependency of the volume resistivity is adequately large, upon subjecting the charged toner transferred on the endless belt by the primary transfer to the secondary transfer, the endless belt is adequately destaticized in a thickness direction thereof, so that the toner releasability due to a self- destaticization of the toner can be enhanced.

## EXAMPLES:

The present invention is described in more detail by Examples, but the Examples are only illustrative and not intended to limit the scope of the present invention. Meanwhile, the raw materials, heat-kneading methods and methods for evaluating properties of the endless belt as used in Examples and Comparative Examples are as follows.

<u>Raw materials</u>

The following raw materials were used. Meanwhile, in Tables, "PEER" represents a polyester polyester copolymer elastomer, and "PBT" represents polybutylene terephthalate. In the column "Composition" described in Tables, a total amount of the thermoplastic elastomer and the thermoplastic resin was 100 parts by weight.

(1) PBT 1: "NOVADURAN 5040ZS (tradename)" produced by Mitsubishi Engineering-Plastics Corporation (hereinafter referred to merely as "5040ZS"):

Weight-average molecular weight: 40,000
Weight-average molecular weight calculated as PS: 122,000
MFR (240°C, load: 2.16 kgf): 4 g/10 min

(2) PBT 2: "NOVADURAN 5010 (tradename)" produced by Mitsubishi Engineering-Plastics Corporation (hereinafter referred to merely as "5010"):

MFR (240°C, load: 2.16 kgf): 16 g/10 min

(3) PBT 3: "128 (tradename)" produced by Kanebo Gosen Co., Ltd. (hereinafter referred to merely as "Kanebo 128"):

Weight-average molecular weight: 40,000
Weight-average molecular weight calculated as PS: 122,000
MFR (240°C, load: 2.16 kgf): 7 g/10 min

(4) PC: (hereinafter referred to merely as "PC"):

Weight-average molecular weight: 28,000
Weight-average molecular weight calculated as PS: 64,000
MFR (280°C, load: 2.16 kgf): 4.8 g/10 min

(5) Thermoplastic elastomer 1: Polyester-ether elastomer "PERPRENE P150B (tradename)" produced by Toyobo., Ltd. (hereinafter referred to merely as "P150B"):

MFR (240°C, load: 2.16 kgf): 19 g/10 min

(6) Thermoplastic elastomer 2: Polyester-ether elastomer "PERPRENE P90B (tradename)" produced by Toyobo., Ltd. (hereinafter referred to merely as "P90B"):

MFR (240°C, load: 2.16 kgf): 20 g/10 min

(7) Thermoplastic elastomer 3: Polyester-polyester elastomer "PERPRENE S3001 (tradename)" produced by Toyobo., Ltd. (hereinafter referred to merely as "S3001"):

MFR (240°C, load: 2.16 kgf): 21 g/10 min

(8) Thermoplastic elastomer 4: Polyester-polyester elastomer "PERPRENE S2001 (tradename)" produced by Toyobo., Ltd. (hereinafter referred to merely as "S2001"):

MFR (240°C, load: 2.16 kgf): 21 g/10 min
Crystalline melting point: 206°C

(9) Thermoplastic elastomer 5: Polyester-polyester elastomer "PERPRENE S1001 (tradename)" produced by Toyobo., Ltd. (hereinafter referred to merely as "S1001"):

MFR (240°C, load: 2.16 kgf): 21 g/10 min
Crystalline melting point: 200°C

(10) Thermoplastic elastomer 6: Polyester-polyester elastomer "PERPRENE S6001 (tradename)" produced by Toyobo., Ltd. (hereinafter referred to merely as "S6001"):

MFR (240°C, load: 2.16 kgf): 15 g/10 min
Crystalline melting point: 218°C

(11) Carbon black: "DENKA BLACK (tradename)" produced by Denki Kagaku Kogyo Co., Ltd.:

DBP oil absorption: 180 mL/100 g
Specific surface area: 65 $m^2/g$
Volatile content: 0%
Average primary particle size: 39 nm

(12) Thickening agent 1: Glycidyl methacrylate-containing polymer "MODIPER A4400 (tradename)" produced by NFO Corporation (hereinafter referred to merely as "A4400");

MI value (190°C, load: 2.16 kgf) according to JIS K7210: 0.3 g/10 min

(13) Thickening agent 2: "MODIPER A4200 (tradename)" produced by NFO Corporation (hereinafter referred to merely as "A4200"):

MI value (190°C, load: 2.16 kgf) according to JIS K7210: 0.6 g/10 min

(14) Polymerization catalyst: Titanium (IV) butoxide/magnesium acetate
(15) Chelator: Phosphate-based antioxidant "PEPQ (tradename)" produced by Clariant Japan Co., Ltd.

<u>Heat-kneading</u>

The respective raw materials were pelletized under the conditions shown in Tables using a twin-screw kneading extruder "PMT32" manufactured by IKG Co., Ltd.

<u>Molding method for production of endless belt</u>

The obtained raw material pellets were dried, charged into a sextuple spiral-type extruder having a diameter of $\phi$160 mm and a die slip width of 1.5 mm which was equipped with a circular die fitted with 16 temperature control mechanisms arranged in a circumferential direction thereof, and then extruded downwardly from the circular die into a molten tube. The molten tube thus extruded was contacted with an outer surface (temperature: 80°C) of a cooling mandrel having an outer diameter of 153 mm which was mounted in a coaxial relation to the circular die through a support bar to allow the tube to be cooled and solidified. Next, the thus obtained tube in the form of a seamless belt was taken up while keeping its cylindrical shape using a cylindrical core disposed inside of the tube and a fourpoint belt-type take-up device disposed outside of the tube, and then laterally cut into a length of 340 mm, thereby obtaining a resin seamless belt having an inner diameter of 151 mm while controlling the extrusion output, the take-up speed and the extrusion temperature such that the thickness and surface resistivity of the resultant belt were 140 $\mu$m and 1 x $10^{10}$ to 1 x $10^{12}$ $\Omega$, respectively. The molding conditions are shown in Tables.

Further, the molding material was sampled using a melt indexer "T- 01 (tradename) " (240°C, load: 2.16 kgf) manufactured by Toyo Seiki Co., Ltd., for 1 min, i.e., for a period of 5 to 6 min from initiation of heating, and the weight (m) of the sampled material was measured to determine an MFR value thereof according to the following formula:

$$\text{MFR (g/10 min)} = (600 \times m) \div t$$

wherein t represents a sampling time (sec) , i.e., 60 sec in the above case; and m is a weight (g) of the sampled material.

<u>Evaluation</u>

The respective properties of the endless belt were evaluated by cutting and spreading the endless belt into a suitable size. The results are shown in Tables.

(1) Surface resistivity:

The surface resistivity of the endless belt was measured using "HIRESTER UP (tradename)" (UR terminal) manufactured by Dia Instruments Co., Ltd., at a pitch of 20 mm in a circumferential direction of the belt under such a condition that voltages of 100V and 500V were applied thereto for 10 sec each.

(2) Volume resistivity:

The volume resistivity of the endless belt was measured using "HIRESTER UP (tradename)" (UR terminal) manufactured by Dia Instruments Co., Ltd., at a pitch of 20 mm in a circumferential direction of the belt under such a condition that voltages of 100V and 250V were applied thereto for 10 sec each.

(3) Environmental change rate of electric resistivity:

As to each of the surface resistivity and the volume resistivity, the electric resistivity value after allowing the endless belt to stand at a temperature of 10°C and a humidity of 20% for 20 hours (LL condition) and the electric resistivity value after allowing the endless belt to stand at a temperature of 30°C and a humidity of 80% for 20 hours (HH condition) were respectively measured to determine a ratio of the electric resistivity value (LL condition) to the electric resistivity value (HH condition) as an environmental change rate of electric resistivity thereof.

(4) Evaluation of durability of endless belt:

The resultant endless belt was mounted as an intermediate transfer belt to an image-forming apparatus, and subjected to continuous output of images to evaluate the number of sheets outputted until the belt suffered from cracks.

(5) Shrinkage percentage:

The endless belt was cut into a belt having a constant width of 200 mm, and then the cut belt was further cut at one portion along a width direction thereof. Next, after allowing the thus obtained sample to stand at a temperature of 23°C and a humidity of 50% for 24 hours, the circumferential length of the endless belt was measured using a three-dimensional measuring apparatus "GJ800A (tradename)" manufactured by Tokyo Seimitsu Co., Ltd., which was equipped with a microscope manufactured by Nikon Co., Ltd. The measured value was expressed by (P).
Next, the thus obtained sample was allowed to stand in a thermo- hygrostat chamber set to a temperature of 60°C and a humidity of 90% for 24 hours, taken out from the chamber, and then allowed to stand again at a temperature of 23°C and a humidity of 50% for 24 hours to measure a circumferential length of the endless belt using the three-dimensional measuring apparatus. The measured value was expressed by (Q) . The shrinkage percentage after allowing the sample to stand at a temperature of 23°C and a humidity of 50% for 24 hours is calculated from the following formula:

$$\texttt{Shrinkage percentage = \{(P) - (Q)\}/(P) x 100}$$

(6) Difference between circumferential lengths:

The endless belt was cut into a belt having a constant width of 200 mm, and then the cut belt was further cut at one portion along a width direction thereof. Next, after allowing the thus obtained sample to stand at a temperature of 23°C and a humidity of 50% for 24 hours, the circumferential length of the endless belt was measured at respective opposite ends thereof using a three-dimensional measuring apparatus "GJ800A (tradename)" manufactured by Tokyo Seimitsu Co., Ltd., which was equipped with a microscope manufactured by Nikon Co., Ltd., to determine the difference between the circumferential lengths at the opposite ends of the endless belt.

(7) Tensile modulus:

According to ISO R1184-1970, the endless belt was cut into a test piece having a width of 15 mm and a length of 150 mm and tested at a pulling speed of 1 mm/min by setting a distance between grips to 100 mm.

(8) Yield point strength:

According to JIS Z1702-62, the endless belt was cut into a test piece having a width of 15 mm and a length of 150 mm and tested at a pulling speed of 50 mm/min by setting a distance between grips to 100 mm and a distance between reference marks to 50 mm.

(9) Tensile break elongation:

According to JIS Z1702-62, the endless belt was cut into a test piece having a width of 15 mm and a length of 150 mm and tested at a pulling speed of 50 mm/min by setting a distance between grips to 100 mm and a distance between reference marks to 50 mm.

(10) Flexing resistance (fold resistance):

According to JIS P-8115, the endless belt was cut into a test piece having a width of 15 mm and a length of 100 mm, and tested using a MIT tester at a folding speed of 175 times/min, a rotating angle of 135° on each of right and left sides and a tensile load of 1.0 kgf by setting a radius of curvature at a tip end of a folding jig to R = 0.38 mm to measure the folding frequency until reaching breakage of the belt.

(11) Resistance to reshaping or deformation due to rollers:

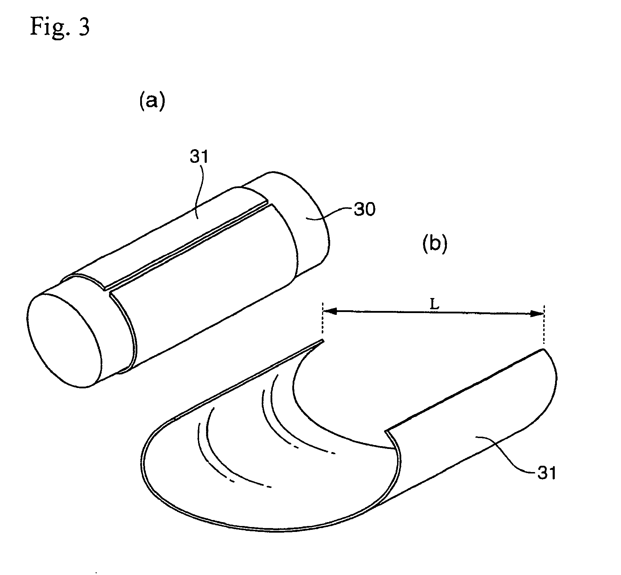

Fig. 3 is a perspective view showing the method for evaluating a roller-reshaping or deforming resistance. As shown in Fig. 3(a), a sample 31 having a width of 15 mm and a length of 44 mm was wound around an outer peripheral surface of a roller 30 having a diameter of $\phi$14 mm, and opposite ends of the sample were fixed together by a tape. The sample was allowed to stand at a temperature of 60°C and a humidity of 90% for 2 hours, and then at a temperature of 23°C and a humidity of 50% for 24 hours. Thereafter, the sample 31 was removed from the roller 30 to measure a distance L (mm) between opposite short sides of the sample reshaped by the roller as shown in Fig. 3(b) and calculate a roller-reshaping restoration rate according to the following formula:

```
Roller-reshaping restoration percentage = L/44 x 100
```

The roller-reshaping or deforming resistance was expressed by the restoration percentage.

(12) Contact angle with water:

One droplet of water was dropped on an outer surface of the endless belt to measure a contact angle between the outer surface of the endless belt and water after the elapse of 1 min using a goniometer "G-1" manufactured by Elmer Corp.

(13) Surface roughness:

An outer surface of the endless belt was cut into a sample having a size of about 50 mm x 50 mm, and the surface roughness thereof was measured at four points in an area of 40 $\mu$m x 40 $\mu$m using an ultra depth shape measuring microscope "VK8500 (tradename)" manufactured by Keyence Co., Ltd., with a lens of x 100 by setting a pitch to 0.01 $\mu$m, a shutter speed to AUTO and a gain to 835. The average of the measured values was determined as the surface roughness of the belt.

(14) Evaluation of images:

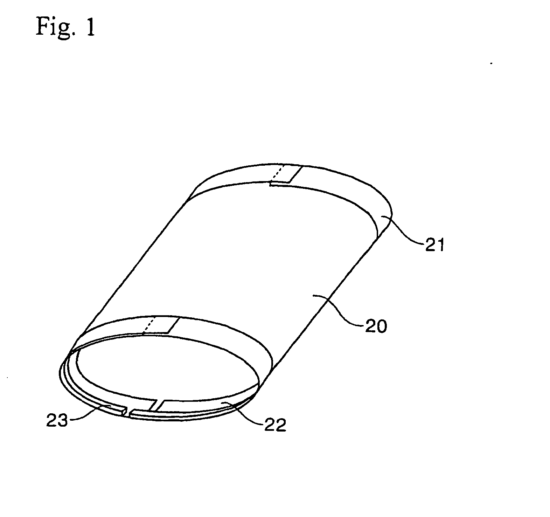

Fig, 1 is a perspective view showing an intermediate transfer belt. As shown in Fig. 1, opposite end portions on outer and inner surfaces of the endless belt (20) were respectively attached with polyester PET tapes each having a thickness of 50 $\mu$m and a width of 10 mm, i.e., with inner reinforcing tapes (22) and outer reinforcing tapes (21) . Further, meander- preventing guide rubbers (23) made of polyurethane which each had a thickness of 1.0 mm and a width of 5 mm were attached onto the opposite end portions on the inner surface of the endless belt. The thus formed endless belt was mounted to a color laser printer "LP3000C (model name) " manufactured by Seiko Epson Co., Ltd., to obtain color images and evaluate the images enlarged by 20 times using a CCD camera.

The evaluation results of missing or lacking of images were classified into Rank ○ for images having a toner-untransferred portion at a percentage of not more than 5%, and Rank △ for images having a toner-untransferred portion at a percentage of more than 5%.

The evaluation results of the deviation of images were classified into Rank ○ for images deviated not more than 50 $\mu$m, Rank △ for images deviated from more than 50 $\mu$m to 80 $\mu$m, and Rank × for images deviated more than 80 $\mu$m.

The evaluation results of each of the primary and secondary transfer properties were classified into Rank ○ for images having a toner-untransferred portion at a percentage of not more than 5%, and Rank △ for images having a toner-untransferred portion at a percentage of more than 5%.

<u><Examples 1 to 8, Comparative Examples 1 to 4 and Reference Example 1></u>

These examples, comparative examples and reference example were performed for explaining the present invention.

<u>Examples 1 to 4:</u>

The respective components were heat-kneaded with each other at the mixing ratio as shown in Table 1, thereby obtaining a molding material in the form of pellets. The heat-kneading conditions are also shown in Table 1. Specifically, the reaction in the kneader was suppressed by controlling the resin temperature and residence time in the kneader, and at the same time, the kneading conditions were controlled such that the electric resistivity of the composition was fallen within a semiconductor region. The thus obtained molding material in the form of pellets were extrusion-molded to produce an endless belt. Meanwhile, in the column "Composition *" in Table 1, the amounts of carbon black, chelator and thickening agent are respectively represented by weight part(s) based on 100 parts by weight of a total amount of the thermoplastic elastomer and the thermoplastic resin.

Any of the endless belts obtained in Examples 1 to 4 exhibited an average surface resistivity value SR (100V) of $1 \times 10^{11}$ to $2 \times 10^{11}$ $\Omega/\square$ and an average volume resistivity value VR (100V) of $3.6 \times 10^{10}$ to $6.0 \times 10^{10}$ $\Omega \cdot$ cm. Also, the voltage dependency of the surface resistivity of the endless belts upon applying a voltage of 100V to 500V [SR (100V) /SR (500V) ] was 1.5 to 5, i.e., within 1 digit (within 10 times) , and the voltage dependency of the volume resistivity of the endless belts upon applying a voltage of 100V to 250V [VR (100V) /VR (250V) ] was 25 to 40, i.e., within 2 digits (within 100 times) . This indicates that the electric resistivity had a good voltage non- dependency.

These endless belts were mounted to an image-forming apparatus as the intermediate transfer belt as shown in Table 1. As a result, it was confirmed that good toner images were obtained upon both primary and secondary transfer procedures.

Further, under the same conditions, the endless belts were subjected to image output of 200, 0000 sheets. As a result, it was confirmed that the endless belts were free from occurrence of cracks, and exhibited a less change in resistivity values even under the both HH and LL conditions and a narrow distribution of the resistivity values. Various properties of the endless belts are shown in Table 2.

<u>Example 5:</u>

The same procedure as defined in Example 1 was conducted except that the kind of thermoplastic elastomer was changed, thereby obtaining an endless belt. As a result, it was confirmed that the endless belt obtained in Example 5 also exhibited a good appearance, a less change in resistivity values due to environmental conditions, and a narrow distribution of the electric resistivity values. When the endless belt was mounted to an image-forming apparatus, it was confirmed that good images were obtained. Essential production conditions and various properties of the obtained endless belt are shown in Tables 1 and 2, respectively.

<u>Example 6:</u>

The same procedure as defined in Example 1 was conducted except that the kind of thickening agent was changed, thereby obtaining an endless belt. As a result, it was confirmed that the endless belt obtained in Example 6 also exhibited a good appearance, a less change in resistivity values due to environmental conditions, and a narrow distribution of the electric resistivity values. When the endless belt was mounted to an image-forming apparatus, it was confirmed that good images were obtained. Essential production conditions and various properties of the obtained endless belt are shown in Tables 1 and 2, respectively.

Example 7:

The same procedure as defined in Example 1 was conducted except that the kind of thermoplastic elastomer was changed, thereby obtaining an endless belt. As a result, it was confirmed that the endless belt obtained in Example 7 also exhibited a good appearance, a less change in resistivity values due to environmental conditions, and a narrow distribution of the electric resistivity values. When the endless belt was mounted to an image-forming apparatus, it was confirmed that good images were obtained. Essential production conditions and various properties of the obtained endless belt are shown in Tables 1 and 2, respectively.

Example 8:

The same procedure as defined in Example 7 was conducted except that no thickening agent was used, thereby obtaining an endless belt. As a result, it was confirmed that the endless belt obtained in Example 8 also exhibited a good appearance, a less change in resistivity values due to environmental conditions, and a narrow distribution of the electric resistivity values. When the endless belt was mounted to an image-forming apparatus, it was confirmed that good images were obtained. It was suggested that even though no thickening agent was used, the polymerization catalyst accelerated compatibility between the thermoplastic elastomer and the thermoplastic resin, resulting in a good thickening effect and a good dispersibility of carbon black in the resin component. Essential production conditions and various properties of the obtained endless belt are shown in Tables 1 and 2, respectively.

Comparative Example 1:

The same procedure as defined in Example 1 was conducted except that carbon black was added to the mixture containing the thermoplastic elastomer and the thermoplastic resin at the same mixing ratio as used in Example 1 without using the thickening agent so as to control the electric resistivity values to a semiconductor region, thereby obtaining an endless belt. Essential production conditions are shown in Table 3. Meanwhile, the column "Composition*" in Table 3, the amounts of carbon black, chelator and thickening agent are respectively represented by weight part(s) based on 100 parts by weight of a total amount of the thermoplastic elastomer and the thermoplastic resin.

In Comparative Example 1, although the surface roughness of the obtained endless belt was good, the surface resistivity and the volume resistivity thereof exhibited a large voltage dependency. Further, the electric resistivity of the endless belt was considerably varied due to environmental conditions, since only a small amount of carbon black was added to attain the electric resistivity in a semiconductor region. When the thus obtained endless belt was mounted to an intermediate transfer device and used therein as an intermediate transfer belt, current leakage in a thickness direction thereof was caused. Various properties of the obtained endless belt are shown in Table 4.

Comparative Example 2:

The same procedure as defined in Example 2 was conducted except that carbon black was added to the mixture containing the thermoplastic elastomer and the thermoplastic resin at the same mixing ratio as used in Example 2 without using the thickening agent so as to control the electric resistivity values to a semiconductor region, thereby obtaining an endless belt. Essential production conditions are shown in Table 3.

In Comparative Example 2, although the surface roughness of the obtained endless belt was good, the surface resistivity and the volume resistivity thereof exhibited a larger voltage dependency than that of Comparative Example 1. Further, the electric resistivity of the endless belt was considerably varied due to environmental conditions since only a small amount of carbon black was added to attain the electric resistivity in a semiconductor region. Various properties of the obtained endless belt are shown in Table 4.

Comparative Example 3:

The same procedure as defined in Example 3 was conducted except that carbon black was added to the mixture containing the thermoplastic elastomer and the thermoplastic resin at the same mixing ratio as used in Example 3 without using the thickening agent so as to control the electric resistivity values to a semiconductor region, thereby obtaining an endless belt. Essential production conditions are shown in Table 3.

In Comparative Example 3, although the surface roughness of the obtained endless belt was good, the surface resistivity and the volume resistivity thereof exhibited a larger voltage dependency than those of Comparative Examples 1 and 2. When the endless belt was used as an intermediate transfer belt in an intermediate transfer-type image-forming apparatus, current leakage in a thickness direction thereof was caused. Further, the electric resistivity of the endless belt was considerably varied due to environmental conditions. Various properties of the obtained endless belt are shown in Table 4.

Comparative Example 4:

The same procedure as defined in Example 1 was conducted except that carbon black was added to the thermoplastic elastomer without adding the thermoplastic resin thereto while adjusting the carbon concentration so as to control the electric resistivity values to a semiconductor region, thereby obtaining an endless belt. Essential production conditions are shown in Table 3.

In Comparative Example 4, although the surface roughness of the obtained endless belt was good, the surface resistivity and the volume resistivity thereof exhibited a largest voltage dependency, since carbon black was deteriorated in dispersibility and only a small amount of carbon black was added to attain the electric resistivity in a semiconductor region. When the endless belt was used as an intermediate transfer belt in an intermediate transfer-type image-forming apparatus, current leakage in a thickness direction thereof was caused. Further, the electric resistivity of the endless belt was considerably varied due to environmental conditions. Various properties of the obtained endless belt are shown in Table 4.

Reference Example 1:

The same procedure as defined in Example 1 was conducted except that carbon black was added to an alloy composed of PBT and PC as the thermoplastic resin without adding the thermoplastic elastomer thereto, and the carbon concentration and the kneading conditions were adjusted so as to control the electric resistivity values to a semiconductor region, thereby obtaining an endless belt. Essential production conditions are shown in Table 3.

In Reference Example 1, although the surface roughness of the obtained endless belt as well as the voltage dependency of the surface resistivity and the volume resistivity thereof were good, the resultant character images suffers from missing or lacking owing to a large modulus thereof. Various properties of the obtained endless belt are shown in Table 4.

Table 1

| Examples | 1 | 2 | 3 | 4 | 5 | 6 | 7 | 8 |
|---|---|---|---|---|---|---|---|---|
| Composition * (wt part) | | | | | | | | |
| Thermoplastic elastomer | | | | | | | | |
| P150B (wt%) | 50 | 30 | 70 | 90 | - | 50 | - | - |
| P90B (wt%) | - | - | - | - | 50 | - | - | - |
| S3001 (wt%) | - | - | -- | - | - | - | 50 | 50 |
| Thermoplastic resin | | | | | | | | |
| 5040ZS (wt%) | 50 | 70 | 30 | 10 | 50 | 50 | 50 | 50 |
| PC (wt%) | - | - | - | - | - | - | - | - |
| Carbon black | 18 | 19 | 17 | 16 | 15 | 18 | 18 | 15 |
| Polymerization catalyst | | | | | | | | |
| Ti concentration (ppm) | 80 | 80 | 80 | 80 | 80 | 80 | 80 | 80 |
| Mg concentration (ppm) | 40 | 40 | 40 | 40 | 40 | 40 | 40 | 40 |
| Chelator | 0.3 | 0.3 | 0.3 | 0.3 | 0.3 | 0.3 | 0.3 | 0.3 |
| Thickening agent | | | | | | | | |
| A4400 | 1.5 | 1.0 | 2.0 | 2.0 | 1.5 | - | 1.0 | - |
| A4200 | - | - | - | - | - | 1.5 | - | - |

(continued)

| Thickening agent | | | | | | | | |
|---|---|---|---|---|---|---|---|---|
| MFR of molding material (g/10 min) | 1.5 | 1 | 4 | 8 | 8 | 2 | 2 | 4 |
| Heat-kneading conditions | | | | | | | | |
| Cylinder temperature (°C) | 250 | 250 | 250 | 240 | 240 | 250 | 250 | 250 |
| Die temperature (°C) | 240 | 240 | 240 | 240 | 240 | 240 | 240 | 240 |
| Screw rotating speed (rpm) | 130 | 130 | 130 | 130 | 130 | 130 | 130 | 130 |
| Molding conditions | | | | | | | | |
| Cylinder temperature (°C) | 250 | 260 | 250 | 250 | 240 | 250 | 250 | 250 |
| Die temperature (°C) | 240 | 240 | 240 | 240 | 240 | 240 | 245 | 245 |
| Screw rotating speed (rpm) | 15.5 | 15.5 | 14 | 13 | 13 | 15 | 15 | 15 |
| Take-up speed (m/min) | 1.4 | 1.4 | 1.4 | 1.4 | 1.4 | 1.4 | 1.4 | 1.4 |

## Table 2

| Examples | 1 | 2 | 3 |
|---|---|---|---|
| Electrical properties | | | |
| SR(100V) (average) (Ω) | $1.00 \times 10^{11}$ | $1.00 \times 10^{11}$ | $2.00 \times 10^{11}$ |
| SR(100V) (distribution) (MAX/MIN) | 3 | 3 | 3 |
| SR(500V) (average) (Ω) | $6.00 \times 10^{10}$ | $5.00 \times 10^{10}$ | $4.00 \times 10^{10}$ |
| SR(100V)/SR(500V) | 1.5 | 2 | 5 |
| VR(100V) (average) (Ω) | $4.00 \times 10^{10}$ | $4.80 \times 10^{10}$ | $4.50 \times 10^{10}$ |
| VR(100V) (distribution) (MAX/MIN) | 8 | 8 | 9 |
| VR(250V) (average) (Ω) | $1.0 \times 10^{9}$ | $1.9 \times 10^{9}$ | $1.8 \times 10^{9}$ |
| VR(100V)/VR(250V) | 40 | 25 | 25 |
| Environmental change rate | | | |
| Surface resistivity | 4 | 3 | 3 |
| Volume resistivity | 7 | 8 | 8 |
| Mechanical properties | | | |
| Tensile modulus (MPa) | 1300 | 1800 | 860 |
| Yield point strength (MPa) | 35 | 46 | 30 |
| Tensile break elongation (%) | 175 | 17 | 414 |
| Fold resistance (times) | * | $7 \times 10^{4}$ | * |
| Shrinkage percentage (%) | 0.12 | 0.11 | 0.12 |
| Surface properties | | | |
| Contact angle with water (°) | 68 | 73 | 63 |
| Surface roughness | | | |
| Ra ($\mu$m) | 0.13 | 0.12 | 0.18 |
| Rmax ($\mu$m) | 1.9 | 1.7 | 1.9 |
| Rz (mm) | 1.1 | 1 | 1.3 |
| Evaluation of images | | | |
| Images (missing or lacking) | O | △ | O |
| Deviation of images | O | O | O |
| Primary transfer property | O | O | O |
| Secondary transfer property | O | O | O |

Note: *Not broken even after repeating folding operation 1.0 x $10^{5}$ times

## Table 2 (continued)

| Examples | 4 | 5 | 6 |
|---|---|---|---|
| Electrical properties | | | |
| SR(100V) (average) ($\Omega$) | $1.00 \times 10^{11}$ | $1.00 \times 10^{11}$ | $3.00 \times 10^{11}$ |
| SR(100V) (distribution) (MAX/MIN) | 3 | 5 | 3 |
| SR(500V) (average) ($\Omega$) | $2.00 \times 10^{10}$ | $1.00 \times 10^{10}$ | $1.00 \times 10^{11}$ |
| SR(100V)/SR(500V) | 5 | 10 | 3 |
| VR(100V) (average) ($\Omega$) | $3.60 \times 10^{10}$ | $4.00 \times 10^{11}$ | $3.00 \times 10^{10}$ |
| VR(100V) (distribution) (MAX/MIN) | 9 | 10 | 8 |
| VR(250V) (average) ($\Omega$) | $1.2 \times 10^{9}$ | $1.00 \times 10^{10}$ | $1.0 \times 10^{9}$ |
| VR(100V)/VR(250V) | 30 | 40 | 30 |
| Environmental change rate | | | |
| Surface resistivity | 3 | 5 | 4 |
| Volume resistivity | 8 | 9 | 7 |
| Mechanical properties | | | |
| Tensile modulus (MPa) | 750 | 1300 | 1300 |
| Yield point strength (MPa) | 25 | 35 | 35 |
| Tensile break elongation (%) | 600 | 175 | 175 |
| Fold resistance (times) | * | * | * |
| Shrinkage percentage (%) | 0.12 | 0.15 | 0.13 |
| Surface properties | | | |
| Contact angle with water (°) | 60 | 65 | 68 |
| Surface roughness | | | |
| Ra ($\mu$m) | 0.22 | 0.2 | 0.23 |
| Rmax ($\mu$m) | 2.2 | 2.1 | 2.1 |
| Rz (mm) | 1.2 | 1.5 | 1.3 |
| Evaluation of images | | | |
| Images (missing or lacking) | O | O | O |
| Deviation of images | △ | O | O |
| Primary transfer property | O | O | O |
| Secondary transfer property | O | O | O |

Note: *Not broken even after repeating folding operation 1.0 x $10^{5}$ times

## Table 2 (continued)

| Examples | 7 | 8 |
|---|---|---|
| Electrical properties | | |
| SR(100V) (average) (Ω) | $8.00 \times 10^{10}$ | $8.00 \times 10^{10}$ |
| SR(100V) (distribution) (MAX/MIN) | 3 | 4 |
| SR(500V) (average) (Ω) | $6.00 \times 10^{10}$ | $4.00 \times 10^{10}$ |
| SR(100V)/SR(500V) | 1.3 | 2 |
| VR(100V) (average) (Ω) | $4.00 \times 10^{10}$ | $3.1 \times 10^{10}$ |
| VR(100V) (distribution) (MAX/MIN) | 7 | 8 |
| VR(250V) (average) (Ω) | $1.8 \times 10^9$ | $2.5 \times 10^8$ |
| VR(100V)/VR(250V) | 25 | 30 |
| Environmental change rate | | |
| Surface resistivity | 3 | 5 |
| Volume resistivity | 8 | 9 |
| Mechanical properties | | |
| Tensile modulus (MPa) | 1300 | 1300 |
| Yield point strength (MPa) | 35 | 35 |
| Tensile break elongation (%) | 180 | 180 |
| Fold resistance (times) | * | * |
| Shrinkage percentage (%) | 0.10 | 0.10 |
| Surface properties | | |
| Contact angle with water (°) | 70 | 70 |
| Surface roughness | | |
| Ra (μm) | 0.13 | 0.11 |
| Rmax (μm) | 1.9 | 1.8 |
| Rz (mm) | 0.9 | 0.9 |
| Evaluation of images | | |
| Images (missing or lacking) | ○ | ○ |
| Deviation of images | ○ | ○ |
| Primary transfer property | ○ | ○ |
| Secondary transfer property | ○ | ○ |

Note: *Not broken even after repeating folding operation $1.0 \times 10^5$ times

Table 3

| Comparative Examples | 1 | 2 | 3 | 4 | Reference Example 1 |
|---|---|---|---|---|---|
| Composition * (wt part) | | | | | |
| Thermoplastic elastomer | | | | | |
| P150B (wt%) | 50 | 30 | 70 | 100 | - |
| P90B (wt%) | - | - | - | - | - |
| S3001 (wt%) | - | - | - | - | - |

(continued)

| Thermoplastic resin | | | | | |
|---|---|---|---|---|---|
| 5040ZS (wt%) | 50 | 70 | 30 | - | 70 |
| PC (wt%) | - | - | - | - | 30 |
| Carbon black | 16 | 17 | 15 | 14 | 19 |
| Polymerization catalyst | | | | | |
| Ti concentration (ppm) | 80 | 80 | 80 | - | 80 |
| Mg concentration (ppm) | 40 | 40 | 40 | - | 40 |
| Chelator | 0.3 | 0.3 | 0.3 | 0.3 | 0.3 |
| Thickening agent | | | | | |
| A4400 | - | - | - | 1 | 1 |
| A4200 | - | - | - | - | - |
| MFR of molding material (g/10 min) | 7 | 5.5 | 9 | 18 | 0.5 |
| Heat-kneading conditions | | | | | |
| Cylinder temperature (°C) | 250 | 250 | 250 | 240 | 260 |
| Die temperature (°C) | 240 | 240 | 240 | 240 | 260 |
| Screw rotating speed (rpm) | 130 | 130 | 130 | 130 | 130 |
| Molding conditions | | | | | |
| Cylinder temperature (°C) | 250 | 260 | 250 | 240 | 260 |
| Die temperature (°C) | 240 | 240 | 240 | 240 | 240 |
| Screw rotating speed (rpm) | 15 | 16 | 14 | 13 | 16 |
| Take-up speed (m/min) | 1.4 | 1.4 | 1.4 | 1.4 | 1.4 |

## Table 4

| Comparative Examples | 1 | 2 | 3 |
|---|---|---|---|
| Electrical properties | | | |
| SR(100V) (average) ($\Omega$) | $1.00 \times 10^{10}$ | $5.00 \times 10^{10}$ | $5.00 \times 10^{10}$ |
| SR(100V) (distribution) (MAX/MIN) | 4 | 3 | 3 |
| SR(500V) (average) ($\Omega$) | $1.00 \times 10^{8}$ | $3.00 \times 10^{8}$ | $3.00 \times 10^{8}$ |
| SR(100V)/SR(500V) | 100 | 160 | 160 |
| VR(100V) (average) ($\Omega$) | $3.00 \times 10^{11}$ | $3.00 \times 10^{11}$ | $3.00 \times 10^{11}$ |
| VR(100V) (distribution) (MAX/MIN) | 8 | 8 | 8 |
| VR(250V) (average) ($\Omega$) | $5.00 \times 10^{8}$ | $1.0 \times 10^{9}$ | $5.00 \times 10^{8}$ |
| VR(100V)/VR(250V) | 600 | 300 | 600 |
| Environmental change rate | | | |
| Surface resistivity | 10 | 8 | 10 |
| Volume resistivity | 30 | 30 | 20 |
| Mechanical properties | | | |
| Tensile modulus (MPa) | 1300 | 1800 | 860 |
| Yield point strength (MPa) | 35 | 46 | 30 |
| Tensile break elongation (%) | 175 | 17 | 414 |
| Fold resistance (times) | * | $3 \times 10^{4}$ | * |
| Shrinkage percentage (%) | 0.13 | 0.12 | 0.15 |
| Surface properties | | | |
| Contact angle with water (°) | 65 | 70 | 60 |
| Surface roughness | | | |
| Ra ($\mu$m) | 0.18 | 0.15 | 0.2 |
| Rmax ($\mu$m) | 2 | 1.9 | 2.2 |
| Rz (mm) | 1.3 | 1.8 | 1.8 |
| Evaluation of images | | | |
| Images (missing or lacking) | O | △ | O |
| Deviation of images | O | O | △ |
| Primary transfer property | O | O | O |
| Secondary transfer property | Leakage occurred | | |

Note: *Not broken even after repeating folding operation $1.0 \times 10^{5}$ times

## Table 4 (continued)

| | Comparative Example 4 | Reference Example 1 |
|---|---|---|
| Electrical properties | | |
| SR(100V) (average) ($\Omega$) | $5.00 \times 10^{10}$ | $3.00 \times 10^{11}$ |
| SR(100V) (distribution) (MAX/MIN) | 3 | 2 |
| SR(500V) (average) ($\Omega$) | $3.00 \times 10^{8}$ | $1.00 \times 10^{11}$ |
| SR(100V)/SR(500V) | 160 | 3 |
| VR(100V) (average) ($\Omega$) | $3.00 \times 10^{11}$ | $5.00 \times 10^{10}$ |
| VR(100V) (distribution) (MAX/MIN) | 8 | 3 |
| VR(250V) (average) ($\Omega$) | $3.00 \times 10^{8}$ | $5.00 \times 10^{9}$ |
| VR(100V)/VR(250V) | 1000 | 10 |
| Environmental change rate | | |
| Surface resistivity | 10 | 3 |
| Volume resistivity | 30 | 8 |
| Mechanical properties | | |
| Tensile modulus (MPa) | 400 | 2400 |
| Yield point strength (MPa) | 25 | 63 |
| Tensile break elongation (%) | 700$\leq$ | 1.5 |
| Fold resistance (times) | * | $8 \times 10^{4}$ |
| Shrinkage percentage (%) | 0.2$\leq$ | 0.08 |
| Surface properties | | |
| Contact angle with water (°) | 58 | 83 |
| Surface roughness | | |
| Ra ($\mu$m) | 0.3 | 0.13 |
| Rmax ($\mu$m) | 2.2 | 1.7 |
| Rz (mm) | 1.5 | 1 |
| Evaluation of images | | |
| Images (missing or lacking) | ○ | △ |
| Deviation of images | × | ○ |
| Primary transfer property | ○ | △ |
| Secondary transfer property | Leakage occurred | △ |

Note: *Not broken even after repeating folding operation $1.0 \times 10^{5}$ times

As apparently recognized from Tables 2 and 4, in Examples according to the present invention, there were obtained the endless belts for image-forming apparatuses which exhibited a small voltage dependency of the electric resistivity thereof, a less change in the electric resistivity due to temperature and humidity environmental conditions, and excellent flexing resistance, chemical resistance and molding dimensional stability, and further were capable of producing high-quality images on every recording paper from rough surface papers to smooth surface papers under any conditions ranging from low-temperature and low-humidity conditions to high-temperature and highhumidity conditions.

EXPLANATIONS OF REFERENCE NUMERALS:

1: Photosensitive drum; 2: Charging device; 3: Exposure optical system; 4: Developing device; 5: Cleaner; 6:

Conductive endless belt; 7, 8, 9: Transporting rollers; 20: Endless belt; 21: Outside reinforcing tape; 22: Inside reinforcing tape; 23: Meander-preventing guide rubber; 30: Rollers; 31: Sample

**Claims**

1. An endless belt for image-forming apparatuses, containing a blended mixture of a thermoplastic elastomer, a thermoplastic resin and a conductive substance, **characterized in that** said endless belt has properties satisfying the following formulae (1), (2) and (3) :

$$SR(100V)/SR(500V) < VR(100V)/VR(250V) \quad (1)$$

$$SR(100V)/SR(500V) \le 30 \quad (2)$$

$$8 \le VR(100V)/VR(250V) \le 100 \quad (3)$$

wherein SR(100V) represents a surface resistivity as measured by applying a voltage of 100 V to the endless belt for 10 sec, SR (500V) represents a surface resistivity as measured by applying a voltage of 500 V to the endless belt for 10 sec, VR (100V) represents a volume resistivity as measured by applying a voltage of 100 V to the endless belt for 10 sec, and VR(250V) represents a volume resistivity as measured by applying a voltage of 250 V to the endless belt for 10 sec.

2. An endless belt for image-forming apparatuses according to claim 1, wherein the conductive substance is contained in an amount of 0.1 to 30 parts by weight 100 parts by weight of a total amount of the thermoplastic elastomer and the thermoplastic resin.

3. An endless belt for image-forming apparatuses according to claim 1 or 2, wherein said blended mixture further contains a viscous polymer having a melt flow rate of 0.01 to 10 g/10 min as measured at 190°C under a load of 2.16 kgf according to JIS K7210 in an amount of 0.01 to 20 parts by weight based on 100 parts by weight of a total amount of the thermoplastic elastomer and the thermoplastic resin.

4. An endless belt for image-forming apparatuses according to claim 3, wherein said viscous polymer is a thickening agent having an epoxy group.

5. An endless belt for image-forming apparatuses according to claim 4, wherein said viscous polymer is a thickening agent having a glycidyl methacrylate group.

6. An endless belt for image-forming apparatuses according to any one of claims 1 to 5, wherein said endless belt has a tensile modulus of 300 to 2500 MPa and a surface roughness Ra of 0.05 to 0.3 $\mu$m, and a contact angle between an outer surface of the endless belt and water is from 60° to less than 90°.

7. An endless belt for image-forming apparatuses according to any one of claims 1 to 6, wherein a weight ratio of the thermoplastic elastomer to the thermoplastic resin is 5:95 to 95:5.

8. An endless belt for image-forming apparatuses according to any one of claims 1 to 6, wherein a weight ratio of the thermoplastic elastomer to the thermoplastic resin is 10:90 to 90:10.

9. An endless belt for image-forming apparatuses according to any one of claims 1 to 6, wherein a weight ratio of the thermoplastic elastomer to the thermoplastic resin is 20:80 to 80:20.

10. An endless belt for image-forming apparatuses according to any one of claims 1 to 9, wherein said thermoplastic elastomer is a polyester-based thermoplastic elastomer.

11. An endless belt for image-forming apparatuses according to any one of claims 1 to 10, wherein said thermoplastic resin is a resin containing polyalkylene terephthalate as a main component.

12. An endless belt for image-forming apparatuses according to claim 11, wherein said polyalkylene terephthalate is polybutylene terephthalate.

13. An endless belt for image-forming apparatuses according to any one of claims 1 to 12, wherein said conductive substance is carbon black having a DBP oil absorption of 50 cm$^3$/100 g to 300 cm$^3$/100 g, a specific surface area of 5 to 500 m$^2$/g, a volatile content of not more than 20% and an average primary particle size of 20 to 50 nm, said carbon black being contained in an amount satisfying the following formulae (4) and (5):

$$\text{Log Y} \geq \text{-X + 20} \qquad (4)$$

$$\text{Log Y} \leq \text{-X + 30} \qquad (5)$$

wherein X is a carbon black content (% by weight) in the endless belt, and Y is a surface resistivity (Ω) of the endless belt as measured by applying thereto a voltage of 100 V for 10 sec.

14. An endless belt for image-forming apparatuses according to any one of claims 1 to 13, wherein said blended mixture exhibits such a melt viscosity that a melt flow rate thereof is 0.1 g/10 min to 25 g/10 min as measured at 240°C under a load of 2.16 kgf according to JIS K7210.

15. An endless belt for image-forming apparatuses according to any one of claims 1 to 14, wherein said endless belt is a molded product obtained by extruding the blended mixture into a molten tube through a cyclic die under heating, and then taking up the molten tube while cooling or cooling and solidifying.

16. An endless belt for image-forming apparatuses according to claim 15, wherein said cyclic die has a plurality of temperature control mechanisms arranged in a circumferential direction thereof.

17. An endless belt for image-forming apparatuses according to claim 15, wherein said molten tube is cooled by contacting each of inner and outer surfaces thereof with a mold whose temperature is controlled to 30 to 150°C.

18. An endless belt for image-forming apparatuses according to claim 15 or 17, wherein said molten tube is taken up while maintaining a cylindrical shape thereof.

19. An endless belt for image-forming apparatuses according to any one of claims 1 to 18, wherein said endless belt is an intermediate transfer belt, a transporting transfer belt, a transfer fixing belt, a fixing belt, a photoconductive belt or a developing belt in the form of a seamless belt.

20. An image-forming apparatus comprising the endless belt as defined in any one of claims 1 to 19.

**Patentansprüche**

1. Endlosband für Bild-bildende Vorrichtungen, das eine Blend-Mischung eines thermoplastischen Elastomers, eines thermoplastischen Harzes und einer leitfähigen Substanz enthält, **dadurch gekennzeichnet, dass** das Endlosband Eigenschaften aufweist, die die folgenden Formeln (1), (2) und (3) erfüllen:

$$\text{SR(100V)/SR(500V) < VR(100V)/VR(250V)} \qquad (1)$$

$$\text{SR(100V)/SR(500V)} \leq 30 \qquad (2)$$

$$8 \leq \text{VR(100V)/VR(250V)} \leq 100 \qquad (3)$$

worin SR (100V) den Oberflächenwiderstand darstellt, wie bei Anlegen einer Spannung von 100 V an das Endlosband für 10 Sekunden gemessen, SR(500V) den Oberflächenwiderstand darstellt, wie bei Anlegen einer Spannung von 500 V an das Endlosband für 10 Sekunden gemessen, VR (100V) den Volumenwiderstand darstellt, wie bei Anlegen einer Spannung von 100 V an das Endlosband für 10 Sekunden gemessen und VR(250V) einen Volumenwiderstand darstellt, wie bei Anlegen einer Spannung bei 250 V an das Endlosband für 10 Sekunden gemessen.

2. Endlosband für Bild-bildende Vorrichtungen gemäß Anspruch 1, worin die leitfähige Substanze in einer Menge von 0,1 bis 30 Gew.-Teilen pro 100 Gew.-Teile einer gesamten Menge des thermoplastischen Elastomers und des thermoplastischen Harzes enthalten ist.

3. Endlosband für Bild-bildende Vorrichtungen gemäß Anspruch 1 oder 2, worin die Blend-Mischung weiterhin ein viskoses Polymer enthält, das eine Schmelzflussrate von 0,01 bis 10 g/10 Minuten hat, wie bei 190°C unter einer Last von 2,16 kgf gemäß JIS K7210 gemessen, in einer Menge von 0,01 bis 20 Gew.-Teile auf Basis von 100 Gew.-Teilen der gesamten Menge des thermoplastischen Elastomers und des thermoplastischen Harzes.

4. Endlosband für Bild-bildende Vorrichtungen gemäß Anspruch 3, worin das viskose Polymer ein Verdickungsmittel ist, das eine Epoxygruppe aufweist.

5. Endlosband für Bild-bildende Vorrichtungen gemäß Anspruch 4, worin das viskose Polymer ein Verdickungsmittel ist, das eine Glycidylmethacrylatgruppe aufweist.

6. Endlosband für Bild-bildende Vorrichtungen gemäß irgendeinem der Ansprüche 1 bis 5, worin das Endlosband ein Zugmodul von 300 bis 2.500 MPa und eine Oberflächenrauheit Ra von 0,05 bis 0,3 $\mu$m aufweist und ein Kontaktwinkel der äußeren Oberfläche des Endlosbandes und Wasser von 60° bis weniger als 90° ist.

7. Endlosband für Bild-bildende Vorrichtungen gemäß irgendeinem der Ansprüche 1 bis 6, worin ein Gewichtsverhältnis des thermoplastischen Elastomers zum thermoplastischen Harz 5:95 bis 95:5 ist.

8. Endlosband für Bild-bildende Vorrichtungen gemäß irgendeinem der Ansprüche 1 bis 6, worin ein Gewichtsverhältnis des thermoplastischen Elastomers zum thermoplastischen Harz 10:90 bis 90:10 ist.

9. Endlosband für Bild-bildende Vorrichtungen gemäß irgendeinem der Ansprüche 1 bis 6, worin ein Gewichtsverhältnis des thermoplastischen Elastomers zum thermoplastischen Harz 20:80 bis 80:20 ist.

10. Endlosband für Bild-bildende Vorrichtungen gemäß irgendeinem der Ansprüche 1 bis 9, worin das thermoplastischen Elastomer ein thermoplastisches Elastomer auf Polyesterbasis ist.

11. Endlosband für Bild-bildende Vorrichtungen gemäß irgendeinem der Ansprüche 1 bis 10, worin das thermoplastische Harz ein Harz ist, das Polyalkylenterephthalat als eine Hauptkomponente enthält.

12. Endlosband für Bild-bildende Vorrichtungen gemäß Anspruch 11, worin das Polyalkylenterephthalat Polybutylenterephthalat ist.

13. Endlosband für Bild-bildende Vorrichtungen gemäß irgendeinem der Ansprüche 1 bis 12, worin die leitfähige Substanz Ruß ist, der eine DBP-Ölabsorption von 50 cm$^3$/100 g bis 300 cm$^3$/100 g, eine spezifische Oberfläche von 5 bis 500 m$^2$/g, einen Gehalt an flüchtigen Bestandteilen von nicht mehr als 20 % und eine mittlere Primärpartikelgröße von 20 bis 50 nm aufweist, worin der Ruß in einer Menge enthalten ist, die die folgenden Formeln (4) und (5) erfüllt:

$$\text{Log } Y \geq -X + 20 \qquad\qquad (4)$$

$$\text{Log } Y \leq -X + 30 \qquad\qquad (5)$$

worin X einen Rußgehalt (Gew.%) im Endlosband ist und Y ein Oberflächenwiderstand (Q) des Endlosbandes ist, wie bei Anlegen einer Spannung von 100 V für 10 Sekunden gemessen.

**14.** Endlosband für Bild-bildende Vorrichtungen gemäß irgendeinem der Ansprüche 1 bis 13, worin die Blend-Mischung eine solche Schmelzviskosität aufweist, dass eine Schmelzflussrate davon 0,1 g/10 Minuten bis 25 g/10 Minuten ist, wie bei 240°C und einer Last von 2,16 kgf gemäß JIS K7210 gemessen.

**15.** Endlosband für Bild-bildende Vorrichtungen gemäß irgendeinem der Ansprüche 1 bis 14, worin das Endlosband ein geformtes Erzeugnis ist, das durch Extrudieren der Blend-Mischung zu einer geschmolzenen Röhre durch eine zyklische Düse unter Erwärmen, und dann Aufnehmen der geschmolzenen Röhre unter Kühlen oder Kühlen und Verfestigen erhalten wird.

**16.** Endlosband für Bild-bildende Vorrichtungen gemäß Anspruch 15, worin die zyklische Düse eine Mehrzahl von Temperatursteuerungsmechanismen aufweist, die in ihrer Umfangsrichtung angeordnet sind.

**17.** Endlosband für Bild-bildende Vorrichtungen gemäß Anspruch 15, worin die geschmolzene Röhre durch in Kontakt bringen sowohl ihrer inneren als auch ihrer äußeren Oberflächen mit einem Formungswerkzeug, dessen Temperatur auf 30 bis 150°C eingestellt ist, gekühlt wird.

**18.** Endlosband für Bild-bildende Vorrichtungen gemäß Anspruch 15 oder 17, worin die geschmolzene Röhre aufgenommen wird, während ihre zylindrische Form erhalten bleibt.

**19.** Endlosband für Bild-bildende Vorrichtungen gemäß irgendeinem der Ansprüche 1 bis 18, worin das Endlosband ein Intermediat-Übertragungsband, ein Transportübertragungsband, ein Übertragungs-Fixierband, ein Fixierband, ein fotoleitfähiges Band oder ein Entwicklungsband in Form eines nahtlosen Bandes ist.

**20.** Bild-bildende Vorrichtung, die das Endlosband gemäß irgendeinem der Ansprüche 1 bis 19 umfasst.

**Revendications**

**1.** Courroie sans fin pour des appareils de formation d'image, contenant une mixture mélangée d'un élastomère thermoplastique, d'une résine thermoplastique et d'une substance conductrice, **caractérisée en ce que** ladite courroie sans fin a des propriétés satisfaisant aux formules suivantes (1), (2) et (3) :

$$SR\,(100V)\,/\,SR\,(500V) < VR\,(100V)\,/\,VR\,(250V) \quad (1)$$

$$SR\,(100V)\,/\,SR\,(500V) \leq 30 \quad (2)$$

$$8 \leq VR\,(100V)\,/\,VR\,(250V) \leq 100 \quad (3)$$

dans lesquelles SR (100V) représente une résistivité de surface telle que mesurée en appliquant une tension de 100 V à la courroie sans fin pendant 10 secondes, SR (500V) représente une résistivité de surface telle que mesurée en appliquant une tension de 500 V à la courroie sans fin pendant 10 secondes, VR (100V) représente une résistivité de volume telle que mesurée en appliquant une tension de 100 V à la courroie sans fin pendant 10 secondes, et VR (250V) représente une résistivité de volume telle que mesurée en appliquant une tension de 250 V à la courroie sans fin pendant 10 secondes.

**2.** Courroie sans fin pour des appareils de formation d'image selon la revendication 1, dans laquelle la substance conductrice est contenue en une quantité de 0,1 à 30 parties en poids pour 100 parties en poids d'une quantité totale de l'élastomère thermoplastique et de la résine thermoplastique.

**3.** Courroie sans fin pour des appareils de formation d'image selon la revendication 1 ou 2, dans laquelle ladite mixture mélangée contient en outre un polymère visqueux ayant un indice de fusion de 0,01 à 10 g/10 minutes tel que mesuré à 190 °C sous une charge de 2,16 kgf selon JIS K7210 en une quantité de 0,01 à 20 parties en poids sur base de 100 parties en poids d'une quantité totale de l'élastomère thermoplastique et de la résine thermoplastique.

4. Courroie sans fin pour des appareils de formation d'image selon la revendication 3, dans laquelle ledit polymère visqueux est un agent d'épaississement ayant un groupe époxy.

5. Courroie sans fin pour des appareils de formation d'image selon la revendication 4, dans laquelle ledit polymère visqueux est un agent d'épaississement ayant un groupe méthacrylate de glycidyle.

6. Courroie sans fin pour des appareils de formation d'image selon l'une quelconque des revendications 1 à 5, dans laquelle ladite courroie sans fin a un module de traction de 300 à 2 500 MPa et une rugosité de surface Ra de 0,05 à 0,3 µm et un angle de contact entre une surface extérieure de la courroie sans fin et de l'eau va de 60° à moins de 90°.

7. Courroie sans fin pour des appareils de formation d'image selon l'une quelconque des revendications 1 à 6, dans laquelle un rapport pondéral de l'élastomère thermoplastique sur la résine thermoplastique va de 5:95 à 95:5.

8. Courroie sans fin pour des appareils de formation d'image selon l'une quelconque des revendications 1 à 6, dans laquelle un rapport pondéral de l'élastomère thermoplastique sur la résine thermoplastique va de 10:90 à 90:10.

9. Courroie sans fin pour des appareils de formation d'image selon l'une quelconque des revendications 1 à 6, dans laquelle un rapport pondéral de l'élastomère thermoplastique sur la résine thermoplastique va de 20:80 à 80:20.

10. Courroie sans fin pour des appareils de formation d'image selon l'une quelconque des revendications 1 à 9, dans laquelle l'élastomère thermoplastique est un élastomère thermoplastique à base de polyester.

11. Courroie sans fin pour des appareils de formation d'image selon l'une quelconque des revendications 1 à 10, dans laquelle la résine thermoplastique est une résine contenant du téréphtalate de polyalkylène en tant que composant principal.

12. Courroie sans fin pour des appareils de formation d'image selon la revendication 11, dans laquelle ledit téréphtalate de polyalkylène est du téréphtalate de polybutylène.

13. Courroie sans fin pour des appareils de formation d'image selon l'une quelconque des revendications 1 à 12, dans laquelle ladite substance conductrice est du noir de carbone ayant une absorption d'huile DBP de 50 cm$^3$/100 g à 300 cm$^3$/100 g, une superface spécifique de 5 à 500 m$^2$/g, une teneur en volatiles non supérieure à 20 % et une taille de particule primaire moyenne de 20 à 50 nm, ledit noir de carbone étant contenu en une quantité satisfaisant aux formules suivantes (4) et (5) :

$$\mathrm{Log}\ Y \geq -X + 20 \qquad (4)$$

$$\mathrm{Log}\ Y \leq -X + 30 \qquad (5)$$

dans lesquelles X est une teneur en noir de carbone (% en poids) dans la courroie sans fin, et Y est une résistivité de surface ($\Omega$) de la courroie sans fin telle que mesurée en lui appliquant une tension de 100 V pendant 10 secondes.

14. Courroie sans fin pour des appareils de formation d'image selon l'une quelconque des revendications 1 à 13, dans laquelle ladite mixture mélangée présente une telle viscosité à l'état fondu qu'un indice de fusion de celle-ci est de 0,1 g/10 minutes à 25 g/10 minutes tel que mesuré à 240 °C sous une charge de 2,16 kgf selon JIS K7210.

15. Courroie sans fin pour des appareils de formation d'image selon l'une quelconque des revendications 1 à 14, dans laquelle ladite courroie sans fin est un produit moulé obtenu en extrudant la mixture mélangée dans un tube fondu à travers une filière cyclique sous chauffage, et en prenant ensuite le tube fondu tout en refroidissant ou en refroidissant et solidifiant.

16. Courroie sans fin pour des appareils de formation d'image selon la revendication 15, dans laquelle ladite filière cyclique a une pluralité de mécanismes de commande de température agencés dans une direction circonférentielle de celle-ci.

17. Courroie sans fin pour des appareils de formation d'image selon la revendication 15, dans laquelle ledit tube fondu est refroidi en mettant en contact chacune des surfaces intérieure et extérieure de celui-ci avec un moule dont la température est commandée à 30 à 150 °C.

18. Courroie sans fin pour des appareils de formation d'image selon la revendication 15 ou 17, dans laquelle ledit tube fondu est pris tout en maintenant sa forme cylindrique.

19. Courroie sans fin pour des appareils de formation d'image selon l'une quelconque des revendications 1 à 18, dans laquelle ladite courroie sans fin est une courroie de transfert intermédiaire, une courroie de transfert de transport, une courroie de fixation par transfert, une courroie de fixation, une courroie photoconductrice ou une courroie de développement sous la forme d'une courroie sans couture.

20. Appareil de formation d'image comprenant la courroie sans fin selon l'une quelconque des revendications 1 à 19.

Fig. 1

Fig. 2

Fig. 3

(a)

(b)

**REFERENCES CITED IN THE DESCRIPTION**

**Patent documents cited in the description**

- JP 63311267 A
- JP 5170946 A
- JP 6228335 A
- JP 3089357 A
- JP 9054506 A
- JP 8099347 A
- JP 10006411 A

- JP 2000062993 A
- JP 2001013802 A
- JP 60170862 A
- JP 4313757 A
- JP 8099374 A
- JP 2003029537 A

**Non-patent literature cited in the description**

- *Journal of Japan Institute of Electrophotographics,* 1994, vol. 33 (1), 43